# EUROPEAN PATENT SPECIFICATION

(11) **EP 4 434 731 B1**
(45) Date of publication and mention of the grant of the patent: **06.05.2026**
(21) Application number: 24152074.1
(22) Date of filing: 16.01.2024
(51) Int. Cl.: B29C 65/02, B29D 24/00, B32B 3/12, B32B 5/18, B32B 27/08, B32B 27/28, B32B 37/00, B32B 37/10, B29C 65/14, B29K 101/12, B29L 24/00, B29L 31/60

(54) **TOOLS AND METHODS FOR FABRICATION OF THERMOPLASTIC PANELS**
WERKZEUGE UND VERFAHREN ZUR HERSTELLUNG VON THERMOPLASTISCHEN PLATTEN
OUTILS ET PROCÉDÉS DE FABRICATION DE PANNEAUX THERMOPLASTIQUES

(30) Priority: 24.03.2023 US 202318189423
(43) Date of publication of application: 25.09.2024
(73) Proprietor: The Boeing Company, Arlington, VA 22202 (US)
(72) Inventor: Sasal, Feride Nur, Arlington, 22202 (US); Turkarslan, Ozlem, Arlington, 22202 (US)
(74) Representative: Witte, Weller & Partner Patentanwälte mbB

(56) References cited:
- EP-A2- 1 504 889
- EP-A2- 2 457 718
- US-A- 5 242 651
- US-A1- 2019 224 939

## Description

### FIELD

The present disclosure relates generally to thermoplastic panels and, particularly, to various tools and methods for fabrication of thermoplastic panels. Examples of a thermoplastic panel include a thermoplastic sandwich panel and a thermoplastic single skin panel. The tools and methods for fabrication of a thermoplastic panel apply pressures and heat to fusion bond the skin of the panel to the core in a non-isothermal manner. Applications to various thermoplastic materials are contemplated. Likewise, fabrication using various pressures, temperatures, and control mechanisms are also contemplated.

### BACKGROUND

Fabrication of thermoplastic sandwich structure results in delamination of the thermoplastic composite skin when low external pressure is applied to the sandwich during attempts at fusion bonding. Conversely, the application of higher pressures results in core crush or deformation because the process temperature is above the melting temperature (for semicrystalline polymer) or the glass transition temperature (for amorphous polymer) of the thermoplastic core material. Additionally, the process window for fusion bonding of a skin to the core is limited on the one hand by a weak bond strength at low temperatures and on the other hand by core collapse and skin delamination at higher temperatures. Under these circumstances, isothermal manufacturing methods (e.g., use of an oven or an autoclave) cannot be used to join the skins and core of the thermoplastic sandwich. Moreover, current use of non-isothermal methods in fusion bonding results in uncontrolled bond line homogeneity.

Accordingly, those skilled in the art continue with research and development efforts to improve the design of tools for fabrication of thermoplastic panels to streamline manufacturing and to implement more consolidated manufacturing processes.

Document EP 2 457 718 A2, according to its abstract, states methods and apparatus for fabricating adhesive bonded joints while minimizing the voids and/or porosity found in the cured bondline. The apparatus comprises an evacuation chamber combined with a pressure inducing device to produce bonded joints. The surfaces to be bonded are continuously evacuated throughout the bonding process (pre-mating, mating, debulking and cure). Continuous evacuation is provided via standard vacuum, while the induced pressure can be pneumatically or mechanically provided.

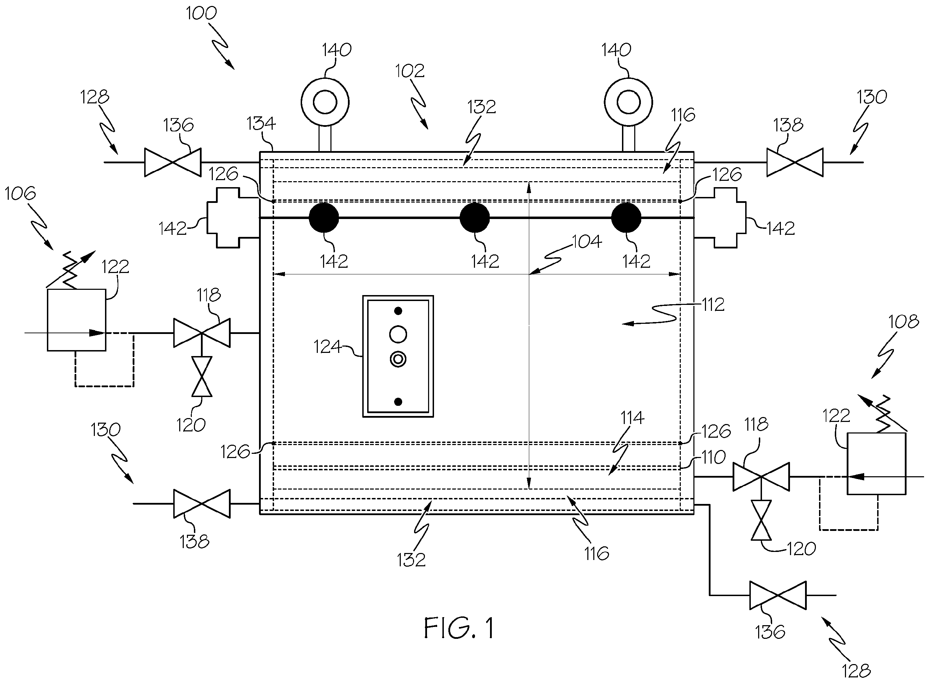

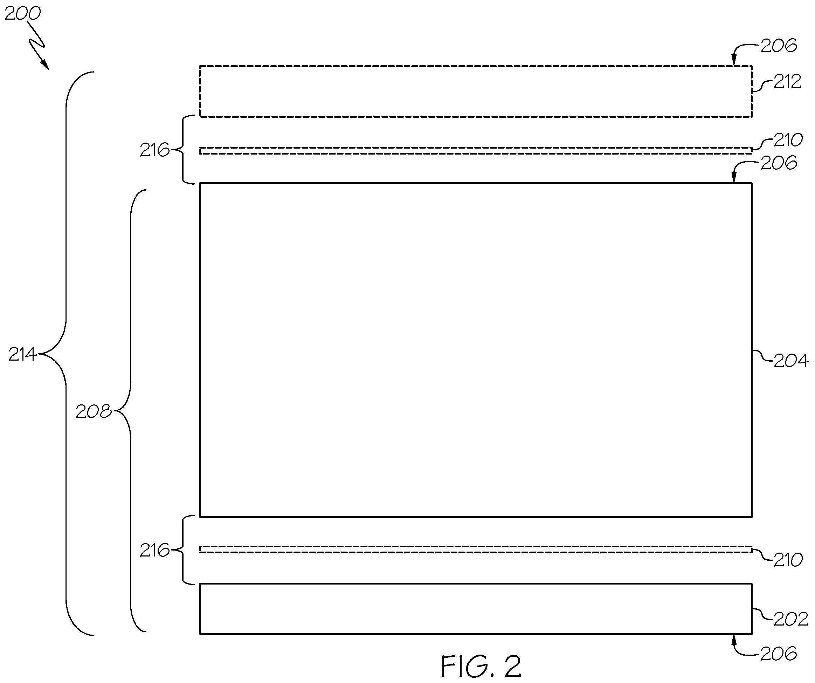

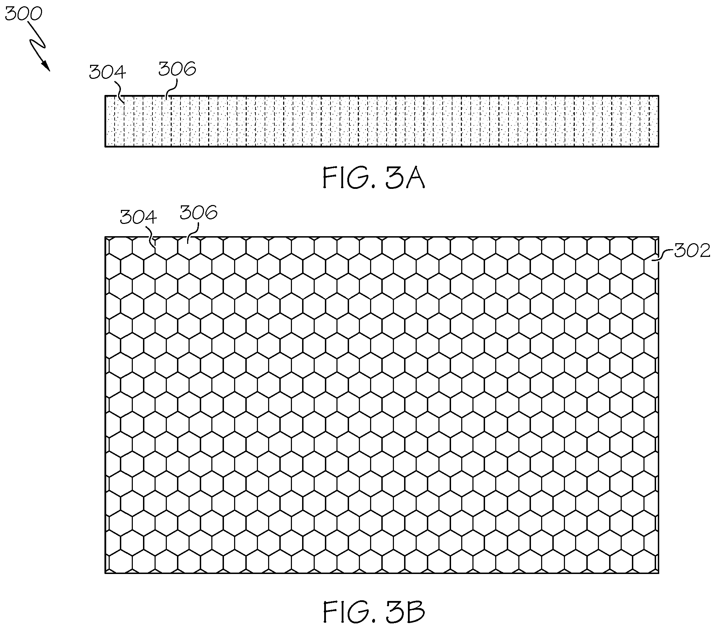

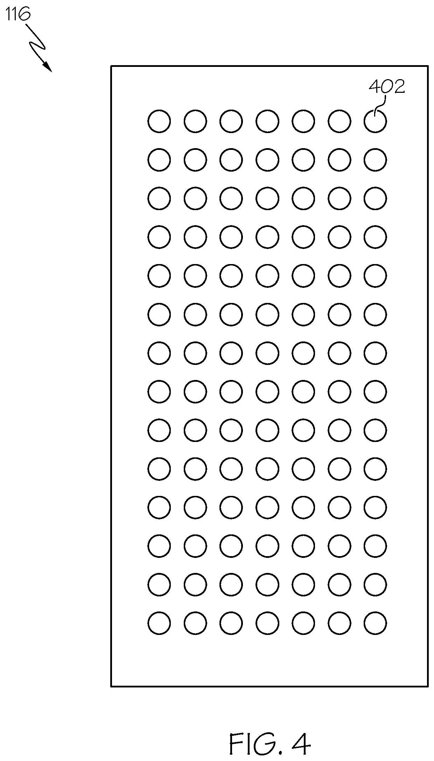

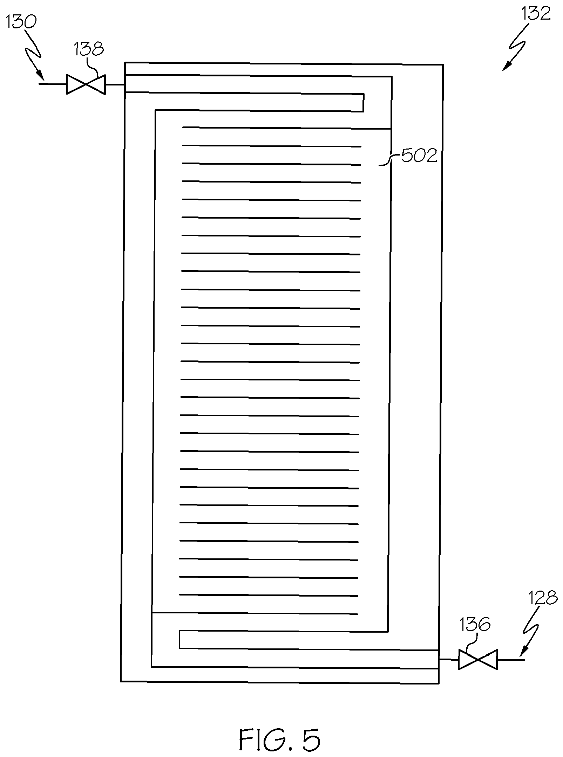

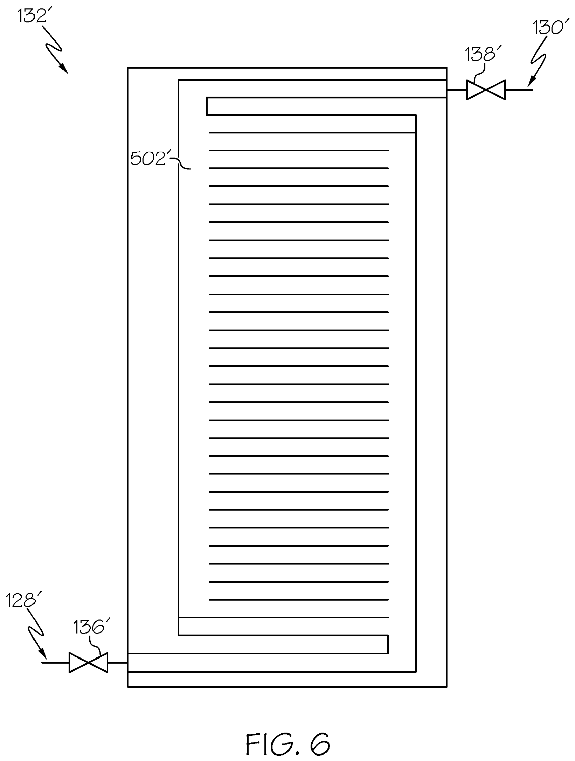

Document EP 1 504 889 A2, according to its abstract, states composite sandwich panels that include a core having a permeable body that is sandwiched between two skins. An internal barrier is located between the skins and the core to provide an impermeable chamber surrounding the permeable core. The chamber is pressurized during formation of the panel to provide an interior counter pressure against the mold/press used to form the panel. The counter pressure applied by the chamber reduces the amount of voids in the skins and improves the surface finish of the skins. In addition, the impermeable material remains within the finished panel to provide an internal barrier surrounding the core. In paragraphs [0024] to [0029], this document states that in a partial view of an assembly of core, barrier and skins is shown in place within a press in FIG. 3. A backup tool is provided that may be heated or cooled, as necessary, without heating or cooling the press. In addition, a shell tool is provided as an aid for handling the panel materials before and after they are placed into the press. The core is in the form of an egg crate structure that is made from a plastic material, such as polyamide 6/6. There is no need to perforate the egg crate to provide core permeability because the shape of the egg crate inherently allows a uniform counter pressure to be applied outwardly against the press. A barrier completely surrounds the core. The barrier is also made from a plastic material, such a polyamide 6/6 that melts at a temperature greater than the molding process temperature. The barrier extends out past the edge of the core and is compression sealed, heat-sealed or otherwise sealed as shown at to provide a closed bag or Chamber in which the core is located. An inlet is located through the press and barrier to provide for the introduction of gas or liquid to pressurize the Chamber defined by the impermeable barrier. Skins are located between the barrier and the Shell tool. The skins are made from a composite material, such as Nylon 6/Eglass. The panel construction composed of the materials just described is easily recyclable since all the plastic components are of the same family. During the molding process, the press is forced together as represented by arrows to provide an inward molding pressure (clamp tonnage) against the skins. At the same time, the impermeable chamber formed by barrier is pressurized with a counter pressure as represented by arrows. The outward counter pressure is generally less than the inward molding pressure or clamp tonnage. The overall molding process is carried out at relatively low pressure. The pressures used are similar to the levels used in vacuum bagged autoclave parts. Generally, it is desirable to use as much internal pressure as possible without creating bag bursts or leaks. Shop air that typically available at from 80 to 150 psi is suitable. However, greater pressures may be used such as nitrogen or helium from high-pressure tanks. The clamp tonnage must be greater than the internal pressure. The need for clamp tonnage or other externally applied pressure can be eliminated by using a very strong and stiff heavy mold that could be bolted together around the periphery of the assembly. However, this is a relatively slow process and there is a risk of clamp failure and possible explosion. Accordingly, the use of presses of the type conventionally employed in making Sandwich panels is preferred. The thickness of the sandwich assemblies is selected so that contact between the skin as and core will occur during the application of clamping tonnage without crushing or otherwise adversely affecting the panel. Typically, the external pressure actually applied by the press against the skins is between 15 to 150 psi. The assembly is also heated during the molding process to partially melt the plastic core, plastic barrier and/or plastic skins to thermally fuse the core, barrier and skins together. This forms a sandwich panel having strong bonds between the three elements. In the embodiment shown in FIG. 3, the plastic materials for the core, barrier and skins should be chosen so that they can be thermally bonded together. If the plastics chosen for these three elements are not compatible for thermal bonding, such as polyamide and polypropylene, then a suitable adhesive must be included between the non-compatible elements. The plastic materials may include fibers embedded in the plastic. It is preferred that the outer skin melts and becomes fused to the barrier while the core melts and becomes fused to the other side of the barrier. In this preferred embodiment, the barrier has the highest melt temperature of the three components. A partial view of an alternate assembly of core, barrier and skins is shown in place within press in FIG.4. The assembly shown in FIG. 4 corresponds to final molded panels of the type shown in FIG. 1. The assembly includes a thermoset self-adhesive composite skin, barrier, and adhesive layers. The perforated honeycomb is shown. The inlet for introducing the pressurizing gas or liquid into so the core is shown. Another example is shown generally in FIG. 5. As in FIGS. 3 and 4, the assembly is shown in place within press, backup tool and shell tool. In this particular embodiment, the assembly includes thermoplastic composite skins that are bonded to barrier using adhesive layers. The barrier is in turn bonded to the perforated core by way of adhesive layers. The inlet for introducing the pressurizing gas or liquid into the core is shown. Assemblies of the type shown in FIG. 5 correspond to finished sandwich panels of the type shown in FIG. 2 wherein the skins, barrier and core are all bonded together using adhesives. An additional exemplary embodiment is shown generally in FIG. 6. The assembly includes a perforated honeycomb core that is bonded to barrier by way of adhesive layers. The barrier is in turn bonded to the composite skin by way of adhesive layers. Outer surface layers are bonded to the composite layers, respectively. The outer material layers can be any of the well-known finishing materials commonly used to provide a surface finish for sandwich panels. These include surfacing films to provide a smooth surface finish, as well as carpeting, decorative sheets or any other material that provides the desired surface finish to the panel. The inlet for introducing the pressurizing gas or liquid into the core is shown.

Document US 5,242,651, according to its abstract, states a method of processing a composite structure in an autoclave involves producing a layup with a low density honeycomb core covered by resin impregnated composite face plies. The layup is sealed to a mold under a vacuum bag. The layup is then cured in an autoclave under high temperatures and pressures. A vacuum is applied between the layup and the vacuum bag via a vacuum port, thus creating a pressure differential across the bag. This creates a compressive consolidating force on the composite face plies. Volatiles emitted during curing are drawn away through the vacuum port. The core communicates with the autoclave by means of a pressurization tube which penetrates the mold and into the core, thus eliminating the pressure differential between the core and the autoclave. Autoclave pressure is communicated throughout the entire core via perforations in the honeycomb core. In column 4, lines 9 to 38, this document states that method permits pressure equilibration between adjacent cells. The pressurization tube, as seen in FIG. 1, serves to introduce the autoclave pressure into the particular cell where the tube penetrates the mold. The pressurization tube is composed of corrosion resistant material such as stainless steel, chrome-plated steel tubing, or nickel-plated steel tubing. For the pressure differential to be zero between the autoclave and the core volume, the pressure introduced into that single cell must be communicated to all the other cells in the core. As illustrated in FIG. 2, pressure communication paths are needed from the interior of one cell to the interior of the neighboring cell and may be provided by perforations. For cells constructed of aluminum or aramid paper, perforations must be made in the cell walls. However, if the material of construction is sufficiently porous, pressure communication will occur automatically. For example, low density HRP glass phenolic core with a very light coating of phenolic resin on the glass fiber bundles will exhibit open holes or Spaces in the weave of the glass. Alternatively, dry fabrics such as glass, Kevlar or graphite are porous enough to permit gas flow. These dry fabrics may be placed against the core face prior to any resin flow, pressure introduced into one cell of the core via the pressurization tube can communicate with other cells by passing through the dry fabric which overlays the other cells. However, after the resin begins to flow, this fabric is impregnated and incorporated into the structure and it can no longer transmit pressure.

Document US 2019/224939 A1, according to its abstract, states a method of fabricating a panel includes laying up a first laminate on a tooling surface, laying a first layer of thermoplastic on an inner surface of the first laminate, laying a large cell carbon core on the first layer of thermoplastic, laying a second layer of thermoplastic across the large cell carbon core, laying a second laminate on the second layer of thermoplastic, creating a sealed core pocket by bonding the edges of the first and second layers of the thermoplastic surrounding a perimeter of the core, increasing pressure within the core pocket, increasing pressure on the outer surface of the second laminate, heating the panel to a desired curing temperature, and maintaining the increased pressures and temperature for a desired curing duration.

### SUMMARY

Disclosed are examples of tools and methods for fabrication of a thermoplastic panel. Examples of thermoplastic panels are also disclosed. The following is a non-exhaustive list of examples, which may or may not be claimed, of the subject matter according to the present disclosure.

The tool for fabrication of a thermoplastic panel includes a sealed vessel, a membrane and a heater. The sealed vessel defines a volume. The sealed vessel includes a first fluid port and a second fluid port. The membrane is disposed within the volume to define a first chamber and a second chamber. The first chamber is configured to receive a first skin and a core of the thermoplastic panel. The first chamber is also configured to selectively apply a first fluidic pressure to the first skin and the core in response to receiving a first fluid via the first fluid port. The membrane is configured to abut a major surface of the thermoplastic panel. The second chamber is configured to selectively apply a second fluidic pressure to the membrane in response to receiving a second fluid via the second fluid port. The heater is configured to selectively direct heat toward the first chamber.

The first fluid port may comprise at least one of a shut off valve, a bleed valve and a pressure regulator valve. The shut off valve may be configured to block the first fluid from receipt by the first chamber. The bleed valve may be configured to bleed pressure from the first chamber down to an ambient pressure after the first fluid is no longer applied to the first chamber. The pressure regulator valve may be configured to adjust a supply pressure of the first fluid to a predetermined tool pressure for fabrication of the thermoplastic panel, in particular wherein the predetermined tool pressure for the first fluid ranges between about 2.5 bar and about 6.9 bar. The second fluid port may comprise at least one of a shut off valve, a bleed valve and a pressure regulator valve, in particular wherein the shut off valve is configured to block the second fluid from receipt by the second chamber. The bleed valve may be configured to bleed pressure from the second chamber down to an ambient pressure after the second fluid is no longer applied to the second chamber. The pressure regulator valve may be configured to adjust a supply pressure of the second fluid to a predetermined tool pressure for fabrication of the thermoplastic panel, in particular wherein the predetermined tool pressure for the second fluid ranges between about 2.5 bar and about 6.9 bar. The membrane may comprise a metal alloyin particular the metal alloy comprises steel. The first skin may comprise a high-performance thermoplastic polymer, in particular wherein the high-performance thermoplastic polymer comprises at least one of a polyetherketoneketone polymer, a polyetheretherketone polymer and a low melt polyaryletherketone polymer. The core may comprise a high-performance thermoplastic polymer, in particular wherein the high-performance thermoplastic polymer comprises at least one of a low melt polyaryletherketone polymer, a polyetherketoneketone polymer, a polyetheretherketone polymer, a polyetherimide polymer, a polyphenylsulfone and a polyamide-imide polymer. The core may comprise at least one of an air permeable thermoplastic foam and an air permeable thermoplastic honeycomb structure, in particular wherein the air permeable thermoplastic honeycomb structure comprises an array of hollow cells orthogonal to the first skin, the array of hollow cells formed by cell walls, the cell walls having a plurality of breather holes such that the air permeable thermoplastic honeycomb structure is air permeable from cell to cell, in particular wherein the array of hollow cells comprises at least one of octagonal-shaped cells, hexagonal-shaped cells, rectangular-shaped cells, square-shaped cells, tubular-shaped cells, corrugated-shaped cells and triangular-shaped cells. The thermoplastic panel may comprise a thermoplastic single skin panel. The first chamber may be configured to receive an interlayer film between the first skin and the core, the thermoplastic panel also comprising the interlayer film, in particular wherein the interlayer film comprises a high-performance thermoplastic polymer, in particular wherein the high-performance thermoplastic polymer comprises at least one of a low melt polyaryletherketone polymer, a polyetherketoneketone polymer, a polyetheretherketone polymer, a polyetherimide polymer, a polyamide-imide polymer and a polyphenylsulfone polymer. The first chamber may be configured to receive a second skin such that the core is disposed between the first skin and the second skin, the thermoplastic panel also comprising the second skin, in particular wherein the thermoplastic panel comprises a thermoplastic sandwich panel. The second skin comprises a high-performance thermoplastic polymer, in particular wherein the high-performance thermoplastic polymer comprises at least one of a polyetherketoneketone polymer, a polyetheretherketone polymer and a low melt polyaryletherketone polymer. The first fluid may comprise at least one of a dry air, an inert gas and a nitrogen gas. The first fluid port may be configured to interface with a supply line from a first fluid source, in particular wherein the first fluid is received by the first chamber in response to at least one of activating the first fluid source, opening the supply line, regulating a supply pressure for the first fluid to a tool pressure and opening the first fluid port. The second fluid may comprise at least one of a dry air, an inert gas, a nitrogen gas, a mineral-based oil and a synthetic-based oil. The second fluid port may be configured to interface with a supply line from a second fluid source, in particular wherein the second fluid is received in the second chamber in response to at least one of activating the second fluid source, opening the supply line, regulating a supply pressure for the second fluid to a tool pressure and opening the second fluid port. The heater may be disposed below the second chamber. The heater may comprise a plurality of electric cartridge heaters distributed across the sealed vessel in relation to a major face of the first skin, in particular wherein the plurality of electric cartridge heaters comprises at least one of a swage cartridge heater and a standard cartridge heater. The tool may further comprise a heating controller in operative communication with the heater to selectively apply electrical power to the plurality of electric cartridge heaters after the second fluid is received by the second chamber and after the first fluid is received by the first chamber, and wherein the heating controller is configured to remove electrical power from the plurality of electric cartridge heaters after the first skin and the core of the thermoplastic panel are fusion bonded at a bond line between the first skin and the core, in particular wherein the heating controller is configured to remove electrical power from the plurality of electric cartridge heaters based at least in part on a predetermined heating time, in particular wherein the predetermined heating time ranges between at least one of about 35 seconds and about 95 seconds, about 50 seconds and about 80 seconds and about 60 seconds and about 70 seconds. The sealed vessel may further comprise at least one temperature sensor within the first chamber and proximate to the bond line between the first skin and the core, wherein the heating controller is in operative communication with the at least one temperature sensor and configured to remove electrical power from the plurality of electric cartridge heaters based at least in part on a temperature signal from the at least one temperature sensor indicating a predetermined temperature associated with creating a fusion bond is detected proximate to the bond line, in particular wherein the predetermined temperature ranges between at least one of about 240 °C and about 280 °C, about 250 °C and about 270 °C, about 255 °C and about 265 °C, about 310 °C and about 350 °C and about 335 °C and about 375 °C. The heater may be configured to selectively heat a bond line between the first skin and the core of the thermoplastic panel to a predetermined temperature associated with creating a fusion bond at the bond line, in particular wherein the predetermined temperature ranges between at least one of about 240 °C and about 280 °C, about 250 °C and about 270 °C, about 255 °C and about 265 °C, about 310 °C and about 350 °C and about 335 °C and about 375 °C. The sealed vessel may further comprise an inlet fluid port; and an outlet fluid port, and wherein the tool further comprises a heat exchanger comprising a plurality of cooling channels in fluid communication with the inlet fluid port and the outlet fluid port, the heat exchanger disposed proximate to the heater on an opposing side of the heater in relation to the first chamber, the heat exchanger configured to transfer heat from the bond line of the thermoplastic panel to a working fluid flowing through the plurality of cooling channels in response to receiving the working fluid via the inlet fluid port, in particular wherein the heat exchanger is configured to route the working fluid through the plurality of cooling channels and out the outlet fluid port. The inlet fluid port is configured to interface with a supply line from a working fluid source and the outlet fluid port is configured to interface with a return line to the working fluid source, in particular wherein the working fluid is received by the heat exchanger in response to at least one of activating the working fluid source, opening the supply line, adjusting a flow rate for the working fluid, opening an inlet valve at the inlet fluid port and opening an outlet valve at the outlet fluid port. The working fluid comprises at least one of a mineral-based oil, a synthetic-based oil, a coolant liquid and a water-based liquid. The sealed vessel may further comprise a lid configured to open the sealed vessel to provide access to the first chamber for positioning the first skin and the core inside the first chamber and configured to close to seal the first chamber, in particular wherein the heater is disposed above the first chamber within the lid, in particular wherein the heater is configured to selectively heat a bond line between the first skin and the core of the thermoplastic panel to a predetermined temperature associated with creating a fusion bond at the bond line when the first skin is proximate to the lid, in particular wherein the lid further comprises an inlet fluid port; an outlet fluid port; and a heat exchanger comprising a plurality of cooling channels in fluid communication with the inlet fluid port and the outlet fluid port, the heat exchanger disposed proximate to the heater on an opposing side of the heater in relation to the first chamber, the heat exchanger configured to transfer heat from the bond line of the thermoplastic panel to a working fluid flowing through the plurality of cooling channels in response to receiving the working fluid via the inlet fluid port, in particular wherein the heat exchanger is configured to route the working fluid through the plurality of cooling channels and out the outlet fluid port. The inlet fluid port may be configured to interface with a supply line from a working fluid source and the outlet fluid port is configured to interface with a return line to the working fluid source, in particular wherein the working fluid is received by the heat exchanger in response to at least one of activating the working fluid source, opening the supply line, adjusting a flow rate for the working fluid, opening an inlet valve at the inlet fluid port and opening an outlet valve at the outlet fluid port. The working fluid may comprise at least one of a mineral-based oil, a synthetic-based oil, a coolant liquid and a water-based liquid.

The method for fabrication of a thermoplastic panel includes selectively applying a second fluid pressure to a membrane supporting the thermoplastic panel, wherein the thermoplastic panel comprises a first skin and a core previously positioned within a sealed vessel divided into a first chamber and a second chamber by the membrane, the second fluid pressure being within the second chamber, wherein the second fluid pressure is based on a predetermined tool pressure of a second fluid supplied to the second chamber; selectively applying a first fluid pressure to the first skin and the core in the first chamber, wherein the first fluid pressure is based on a predetermined tool pressure of a first fluid supplied to the first chamber; and selectively directing heat toward the first chamber to heat a bond line between the first skin and the core to a predetermined temperature associated with creating a fusion bond at the bond line; the method further comprising supplying the first fluid to the first chamber in response to at least one of activating a first fluid source, opening a supply line to the first chamber, regulating a supply pressure for the first fluid to the predetermined tool pressure and opening a fluid port associated with the first chamber; and supplying the second fluid to the second chamber in response to at least one of activating a second fluid source, opening a supply line to the second chamber, regulating a supply pressure for the second fluid to the predetermined tool pressure and opening a fluid port associated with the second chamber.

The predetermined tool pressure for the first fluid may range between about 2.5 bar and about 6.9 bar. The first fluid may comprise at least one of a dry air, an inert gas and a nitrogen gas. The predetermined tool pressure for the second fluid may range between about 2.5 bar and about 6.9 bar. The second fluid may comprise at least one of a dry air, an inert gas, a nitrogen gas, a mineral-based oil and a synthetic-based oil. The core may comprise at least one of an air permeable thermoplastic foam and an air permeable thermoplastic honeycomb structure. The thermoplastic panel may comprise a thermoplastic single skin panel. The thermoplastic panel also may comprise an interlayer film between the first skin and the core at the bond line and the first fluid pressure is also selectively applied to the interlayer film. The method may further comprise opening a lid of a sealed vessel to gain access to the first chamber; positioning the first skin and the core of the thermoplastic panel inside the first chamber; and closing the lid to seal the first chamber. The method may further comprise stopping the selectively directing of heat toward the first chamber after the bond line between the first skin and the core of the thermoplastic panel reaches the predetermined temperature; and transferring heat from the bond line to a working fluid flowing through a heat exchanger. The method may further comprise selectively applying electrical power to a heater to selectively direct the heat toward the first chamber; and removing electrical power from the heater after the first skin and the core of the thermoplastic panel are fusion bonded at the bond line between the first skin and the core. The electrical power may removed from the heater based at least in part on a predetermined heating time. The predetermined heating time may range between at least one of about 35 seconds and about 95 seconds, about 50 seconds and about 80 seconds and about 60 seconds and about 70 seconds. The method may further comprise detecting a predetermined temperature associated with creating a fusion bond proximate to the bond line between the first skin and the core; and removing electrical power from the heater based at least in part on the predetermined temperature being detected at the bond line. The predetermined temperature ranges may be between at least one of about 240 °C and about 280 °C, about 250 °C and about 270 °C, about 255 °C and about 265 °C, about 310 °C and about 350 °C and about 335 °C and about 375 °C. The method may further comprise routing the working fluid through a plurality of cooling channels proximate to the heater and on an opposite side of the heater in relation to the first chamber. The method may further comprise supplying the working fluid to the heat exchanger in response to at least one of activating a working fluid source, opening a supply line to the heat exchanger, adjusting a flow rate for the working fluid, opening an inlet fluid port associated with the heat exchanger and opening an outlet fluid port associated with the heat exchanger. The working fluid comprises at least one of a mineral-based oil, a synthetic-based oil, a coolant liquid and a water-based liquid. The method may further comprise releasing the first fluid pressure from the first chamber; releasing the second fluid pressure from the second chamber; opening a lid of the sealed vessel to gain access to the first chamber; and removing the thermoplastic panel from the first chamber. The thermoplastic panel may also comprise a second skin, the first fluid pressure is also selectively applied to the second skin and the heat is also selectively directed to heat a second bond line between the second skin and the core to the predetermined temperature. The thermoplastic panel may comprise a thermoplastic sandwich panel. The method may further comprise opening a lid of a sealed vessel to gain access to the first chamber; positioning the first skin, the core and the second skin of the thermoplastic panel inside the first chamber; and closing the lid to seal the first chamber.

Other examples of the disclosed tools and methods for fabrication of a thermoplastic panel as well as the disclosed thermoplastic panels will become apparent from the following detailed description, the accompanying drawings and the appended claims.

### BRIEF DESCRIPTION OF THE DRAWINGS

Fig. 1 is a functional diagram of an example of a tool for fabrication of a thermoplastic panel;
Fig. 2 is an exploded view of an example of a thermoplastic panel;
Figs. 3A and 3B provide top and side views of an example of an air permeable thermoplastic honeycomb structure for a thermoplastic panel;
Fig. 4 is a top view of an example of a heater for the tool of Fig. 1;
Fig. 5 is a top view of an example of a heat exchanger for the tool of Fig. 1;
Fig. 6 is a top view of another example of a heat exchanger for the tool of Fig. 1;
Fig. 7 provides a top view of the tool of Fig. 1;
Fig. 8 is a cross-section functional diagram of the tool of Fig. 1;
Figs. 9A and 9B provide a flow diagram of an example of a method for fabrication of a thermoplastic panel;
Fig. 10, in combination with Figs. 9A and 9B, is a flow diagram of another example of a method for fabrication of a thermoplastic panel;
Fig. 11, in combination with Figs. 9A, 9B and 10, is a flow diagram of yet another example of a method for fabrication of a thermoplastic panel;
Fig. 12, in combination with Figs. 9A and 9B, is a flow diagram of still another example of a method for fabrication of a thermoplastic panel;
Fig. 13, in combination with Fig. 9A, is a flow diagram of still yet another example of a method for fabrication of a thermoplastic panel;
Fig. 14A through 14F, provide a graph and images of an example of a heating and cooling cycle during a trial fabrication of an example of a thermoplastic panel using an example of the tool disclosed herein;
Fig. 15 is a block diagram of aircraft production and service methodology; and
Fig. 16 is a schematic illustration of an aircraft.

### DETAILED DESCRIPTION

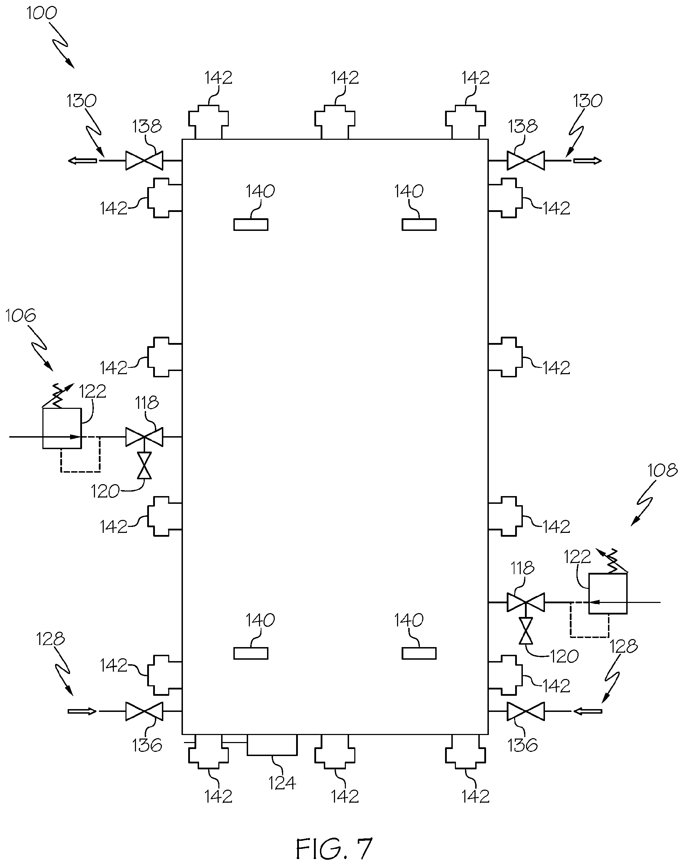

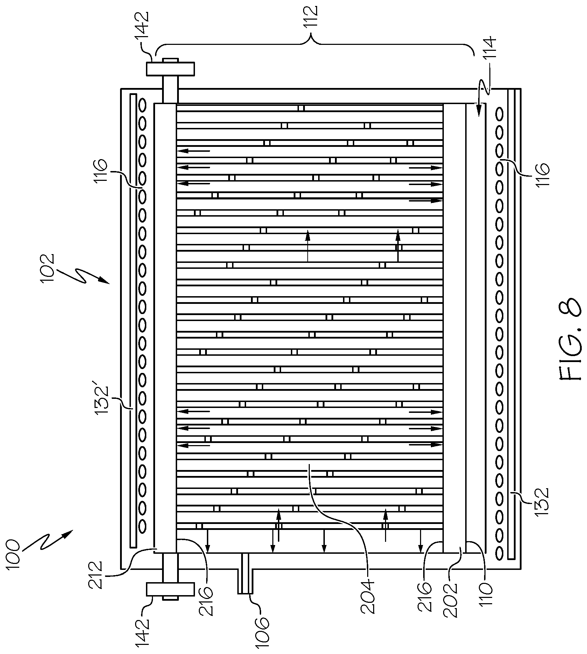

Referring generally to Figs. 1, 2, 3A, 3B and 4-8, by way of examples, the present disclosure is directed to a tool 100 for fabrication of a thermoplastic panel 200. Figs. 1, 7 and 8 disclose an example of the tool 100 that includes, for example, a sealed vessel 102, a membrane 110 and a heater 116. Figs. 1, 7 and 8 also disclose a heat exchanger 132 and other components of the tool 100. Fig. 2 discloses an example of the thermoplastic panel 200. Figs. 3A and 3B disclose an example of an air permeable thermoplastic honeycomb structure 300 for the thermoplastic panel 200. Fig. 4 discloses an example of the heater 116. Figs. 5 and 6 disclose several examples of the heat exchanger 132.

With reference again to Figs. 1, 2, 3A, 3B and 4-8, in one or more examples, a tool 100 for fabrication of a thermoplastic panel 200 includes a sealed vessel 102, a membrane 110 and a heater 116. The sealed vessel 102 defines a volume 104. The sealed vessel 102 includes a first fluid port 106 and a second fluid port 108. The membrane 110 is disposed within the volume 104 to define a first chamber 112 and a second chamber 114. The first chamber 112 is configured to receive a first skin 202 and a core 204 of the thermoplastic panel 200. The first chamber 112 is also configured to selectively apply a first fluidic pressure to the first skin 202 and the core 204 in response to receiving a first fluid via the first fluid port 106. The membrane 110 is configured to abut a major surface 206 of the thermoplastic panel 200. The second chamber 114 is configured to selectively apply a second fluidic pressure to the membrane 110 in response to receiving a second fluid via the second fluid port 108. The heater 116 is configured to selectively direct heat toward the first chamber 112.

In another example of the tool 100, the first fluid port 106 includes at least one of a shut off valve 118, a bleed valve 120 and a pressure regulator valve 122. In a further example, the shut off valve 118 is configured to block the first fluid from receipt by the first chamber 112. In another further example, the bleed valve 120 is configured to bleed pressure from the first chamber 112 down to an ambient pressure after the first fluid is no longer applied to the first chamber 112. In yet another further example, the pressure regulator valve 122 is configured to adjust a supply pressure of the first fluid to a predetermined tool pressure for fabrication of the thermoplastic panel 200. In an even further example, the predetermined tool pressure for the first fluid ranges between about 2.5 bar (e.g., about 36 psi) and about 6.9 bar (e.g., about 100 psi) or any suitable tool pressure range. In other examples, the predetermined tool pressure for the first fluid may be about the same as the pressure of the second fluid.

In yet another example of the tool 100, the second fluid port 108 includes at least one of a shut off valve 118, a bleed valve 120 and a pressure regulator valve 122.

In a further example, the shut off valve 118 is configured to block the second fluid from receipt by the second chamber 114.

In another further example, the bleed valve 120 is configured to bleed pressure from the second chamber 114 down to an ambient pressure after the second fluid is no longer applied to the second chamber 114.

In yet another further example, the pressure regulator valve 122 is configured to adjust a supply pressure of the second fluid to a predetermined tool pressure for fabrication of the thermoplastic panel 200. In an even further example, the predetermined tool pressure for the second fluid ranges between about 2.5 bar (e.g., about 36 psi) and about 6.9 bar (e.g., about 100 psi) or any suitable tool pressure range. In other examples, the predetermined tool pressure for the second fluid may be about the same as the pressure of the first fluid.

In still another example of the tool 100, the membrane 110 includes a metal alloy. In a further embodiment, the metal alloy includes steel. The membrane 110 thickness may be about 1/10^{th} of the thickness of the first skin 202. For example, if the thickness of the first skin 202 is about 2 mm, the thickness of the membrane may be about 0.2 mm. The thickness of the membrane 110 may vary between a thicker middle section and a thinner weld section around the perimeter.

In still yet another example of the tool 100, the first skin 202 includes a high-performance thermoplastic polymer. In a further example, the high-performance thermoplastic polymer includes a polyetherketoneketone (PEKK) polymer, a polyetheretherketone (PEEK) polymer, a low melt (LM) polyaryletherketone (PAEK) polymer or any suitable high-performance thermoplastic polymer in any suitable combination. In other examples, the first skin 202 may include multiple plies.

In another example of the tool 100, the core 204 includes a high-performance thermoplastic polymer. In a further example, the high-performance thermoplastic polymer includes a LM PAEK polymer, a PEKK polymer, a PEEK polymer, a polyetherimide (PEI) polymer, a polyphenylsulfone (PPSU), a polyamide-imide (PAI) polymer or any suitable high-performance thermoplastic polymer in any suitable combination.

In yet another example of the tool 100, the core 204 includes an air permeable thermoplastic foam, an air permeable thermoplastic honeycomb structure 300 or any suitable core material in any suitable combination. In a further example, the air permeable thermoplastic honeycomb structure 300 includes an array of hollow cells 302 orthogonal to the first skin 202. The array of hollow cells 302 formed by cell walls 304. The cell walls 304 having a plurality of breather holes 306 such that the air permeable thermoplastic honeycomb structure 300 is air permeable from cell to cell. In an even further example, the array of hollow cells 302 includes octagonal-shaped cells, hexagonal-shaped cells, rectangular-shaped cells, square-shaped cells, tubular-shaped cells, corrugated-shaped cells, triangular-shaped cells or cells of any suitable shape in any suitable combination.

In still another example of the tool 100, the thermoplastic panel 200 is a thermoplastic single skin panel 208.

In still yet another example of the tool 100, the first chamber 112 is configured to receive an interlayer film 210 between the first skin 202 and the core 204. In this example, the thermoplastic panel 200 also includes the interlayer film 210. In a further example, the interlayer film 210 includes a high-performance thermoplastic polymer. In an even further example, the high-performance thermoplastic polymer includes a LM PAEK polymer, a PEKK polymer, a PEEK polymer, a PEI polymer, a PAI polymer, a PPSU polymer or any suitable high-performance thermoplastic polymer in any suitable combination.

In another example of the tool 100, the first chamber 112 is configured to receive a second skin 212 such that the core 204 is disposed between the first skin 202 and the second skin 212. In this example, the thermoplastic panel 200 also includes the second skin 212. In a further example, the thermoplastic panel 200 is a thermoplastic sandwich panel 214. In another further example, the second skin 212 includes a high-performance thermoplastic polymer. In an even further example, the high-performance thermoplastic polymer includes a PEKK polymer, a PEEK polymer, a LM PAEK polymer or any suitable high-performance thermoplastic polymer in any suitable combination. In other examples, the second skin 212 may include multiple plies.

In another example of the tool 100, the first fluid includes a dry air, an inert gas, a nitrogen gas, or any suitable fluid in any suitable combination. The first fluid is selected to facilitate heat transfer by convection in the first chamber 112 and to limit heat transfer by conduction.

In yet another example of the tool 100, the first fluid port 106 is configured to interface with a supply line from a first fluid source. In a further example, the first fluid is received by the first chamber 112 in response to at least one of activating the first fluid source, opening the supply line, regulating a supply pressure for the first fluid to a tool pressure and opening the first fluid port 106.

In still another example of the tool 100, the second fluid includes a dry air, an inert gas, a nitrogen gas, a mineral-based oil, a synthetic-based oil or any suitable fluid in any suitable combination. The second fluid may be selected to facilitate heat transfer by conduction through the second chamber 114 toward the first chamber 112.

In still yet another example of the tool 100, the second fluid port 108 is configured to interface with a supply line from a second fluid source. In a further example, the second fluid is received in the second chamber 114 in response to at least one of activating the second fluid source, opening the supply line, regulating a supply pressure for the second fluid to a tool pressure and opening the second fluid port 108.

In another example of the tool 100, the heater 116 is disposed below the second chamber 114.

With reference again to Figs. 1, 2, 4, 5, 7 and 8, in one or more examples of the tool 100, the heater 116 includes a plurality of electric cartridge heaters 402 distributed across the sealed vessel 102 in relation to a major face of the first skin 202. In another example of the tool 100, the plurality of electric cartridge heaters 402 includes a swage cartridge heater, a standard cartridge heater, or any suitable electric cartridge heater in any suitable combination.

In yet another example, the tool 100 also includes a heating controller 124 in operative communication with the heater 116 to selectively apply electrical power to the plurality of electric cartridge heaters 402 after the second fluid is received by the second chamber 114 and after the first fluid is received by the first chamber 112. The heating controller 124 is configured to remove electrical power from the plurality of electric cartridge heaters 402 after the first skin 202 and the core 204 of the thermoplastic panel 200 are fusion bonded at a bond line 216 between the first skin 202 and the core 204.

In a further example, the heating controller 124 is configured to remove electrical power from the plurality of electric cartridge heaters 402 based at least in part on a predetermined heating time. In an even further example, the predetermined heating time ranges between about 35 seconds and about 95 seconds, about 50 seconds and about 80 seconds, about 60 seconds and about 70 seconds or any suitable heating time range.

In another further example of the tool 100, the sealed vessel 102 also includes at least one temperature sensor 126 within the first chamber 112 and proximate to the bond line 216 between the first skin 202 and the core 204. The heating controller 124 is in operative communication with at least one temperature sensor 126 and configured to remove electrical power from the plurality of electric cartridge heaters 402 based at least in part on a temperature signal from the at least one temperature sensor 126 indicating a predetermined temperature associated with creating a fusion bond is detected proximate to the bond line 216. In an even further example, the predetermined temperature ranges between about 240 °C and about 280 °C, about 250 °C and about 270 °C, about 255 °C and about 265 °C, about 310 °C and about 350 °C, about 335 °C and about 375 °C or any suitable temperature range.

Generally, the heating controller 124 uses the at least one temperature sensor 126 to control the heater 116 for a non-isothermal heating and cooling cycle to create the fusion bond between the first skin 202 and the core 204 of the thermoplastic panel 200.

With reference again to Figs. 1, 2, 5, 7 and 8, in one or more examples of the tool 100, the heater 116 is configured to selectively heat a bond line 216 between the first skin 202 and the core 204 of the thermoplastic panel 200 to a predetermined temperature associated with creating a fusion bond at the bond line 216. In yet another example of the tool 100, the predetermined temperature ranges between about 240 °C and about 280 °C, about 250 °C and about 270 °C, about 255 °C and about 265 °C, about 310 °C and about 350 °C, about 335 °C and about 375 °C or any suitable temperature range.

In still another example of the tool 100, the sealed vessel 102 also includes an inlet fluid port 128 and an outlet fluid port 130. In this example, the tool 100 also includes a heat exchanger 132. The heat exchanger 132 includes a plurality of cooling channels 502 in fluid communication with the inlet fluid port 128 and the outlet fluid port 130. The heat exchanger 132 is disposed proximate to the heater 116 on an opposing side of the heater 116 in relation to the first chamber 112. The heat exchanger 132 is configured to transfer heat from the bond line 216 of the thermoplastic panel 200 to a working fluid flowing through the plurality of cooling channels 502 in response to receiving the working fluid via the inlet fluid port 128.

In a further example, the heat exchanger 132 is configured to route the working fluid through the plurality of cooling channels 502 and out the outlet fluid port 130, 130'.

In another further example, the inlet fluid port 128 is configured to interface with a supply line from a working fluid source and the outlet fluid port 130 is configured to interface with a return line to the working fluid source. In an even further example, the working fluid is received by the heat exchanger 132 in response to at least one of activating the working fluid source, opening the supply line, adjusting a flow rate for the working fluid, opening an inlet valve 136 at the inlet fluid port 128 and opening an outlet valve 138 at the outlet fluid port 130. The flow rate and temperature of the working fluid received by the heat exchanger 132 may be adjusted to achieve desired temperatures at the bond line 216 at certain time intervals during a fusion bonding cycle.

In yet another further example, the working fluid includes a mineral-based oil, a synthetic-based oil, a coolant liquid, a water-based liquid, or any suitable working fluid in any suitable combination.

With reference again to Figs. 1, 2, 4 and 6-8, in one or more examples of the tool 100, the sealed vessel 102 also includes a lid 134. The lid 134 is configured to open the sealed vessel 102 to provide access to the first chamber 112 for positioning the first skin 202 and the core 204 inside the first chamber 112 and configured to close to seal the first chamber 112. After the lid 134 is open, prior to positioning the first skin 202 and the core 204, the first chamber 112 may be treated with a release agent to avoid sticking of the thermoplastic panel 200 during removal from the first chamber 112. Alternatively, prior to positioning the first skin 202 and the core 204, these items may be treated with a release agent for the same purpose. For example, the release agent may include a release film or a release liquid applied with a cloth or as a spray.

The lid 134 may include eyelets 140 or similar hardware to facilitate opening the lid 134 and/or lifting the lid 134 away from the tool 100. The tool 100 and/or lid 134 may include attaching hardware 142 suitable for securing the lid 134 in a closed position and for releasing the lid 134 to transition to an open position. The lid 134 may be configured such that, in the closed position, the height of the first chamber 112 is not less than the height of the thermoplastic panel 200 and about the same as the height of the thermoplastic panel 200 with a sufficient tolerance. For example, the lid 134 may be adjustable or sized such that the thermoplastic panel 200 is a close fit with a sufficient tolerance within the first chamber 112.

In another example of the tool 100, the heater 116 is disposed above the first chamber 112 within the lid 134. In a further example, the heater 116 is configured to selectively heat a bond line 216 between the first skin 202 and the core 204 of the thermoplastic panel 200 to a predetermined temperature associated with creating a fusion bond at the bond line 216 when the first skin 202 is proximate to the lid 134.

With reference again to Figs. 1, 2, 4 and 6-8, in one or more examples of the tool 100, the lid 134 also includes an inlet fluid port 128', an outlet fluid port 130' and a heat exchanger 132'. The heat exchanger includes a plurality of cooling channels 502 in fluid communication with the inlet fluid port 128' and the outlet fluid port 130'. The heat exchanger 132' is disposed proximate to the heater 116 on an opposing side of the heater 116 in relation to the first chamber 112. The heat exchanger 132' is configured to transfer heat from the bond line 216 of the thermoplastic panel 200 to a working fluid flowing through the plurality of cooling channels 502' in response to receiving the working fluid via the inlet fluid port 128'.

In another example of the tool 100, the heat exchanger 132' is configured to route the working fluid through the plurality of cooling channels 502' and out the outlet fluid port 130'. In yet another example of the tool 100, the inlet fluid port 128' is configured to interface with a supply line from a working fluid source and the outlet fluid port 130' is configured to interface with a return line to the working fluid source.

In still another example of the tool 100, the working fluid is received by the heat exchanger 132' in response to at least one of activating the working fluid source, opening the supply line, adjusting a flow rate for the working fluid, opening an inlet valve 136' at the inlet fluid port 128' and opening an outlet valve 138' at the outlet fluid port 130'. The flow rate and temperature of the working fluid received by the heat exchanger 132' may be adjusted to achieve desired temperatures at the bond line 216 at certain time intervals during a fusion bonding cycle.

In still yet another example of the tool 100, the working fluid includes a mineral-based oil, a synthetic-based oil, a coolant liquid, a water-based liquid, or any suitable working fluid in any suitable combination.

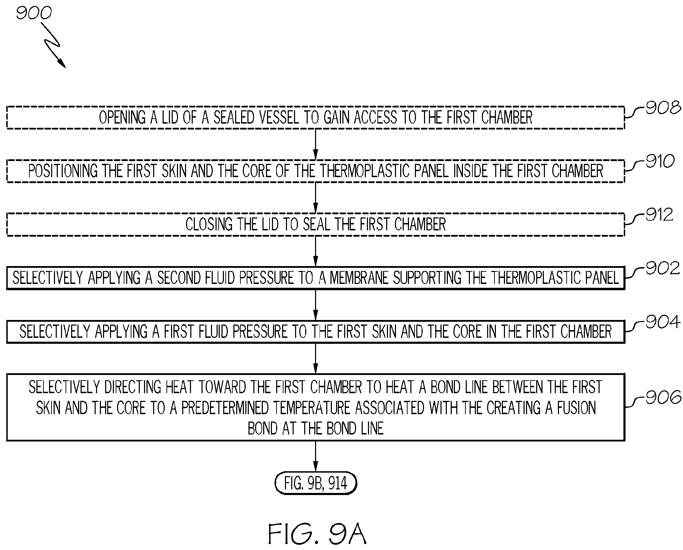

Referring generally to Figs. 9A, 9B and 10-13, by way of examples, the present disclosure is directed to a method 900 for fabrication of a thermoplastic panel 200. Optional features in Figs. 9A, 9B and 10-13 are depicted in dashed blocks of the flow diagrams.

With reference again to Figs. 1, 2, 5, 7, 8, 9A and 9B, in one or more examples, a method 900 for fabricating a thermoplastic panel 200 begins at 902 where a second fluid pressure is applied to a membrane 110 supporting the thermoplastic panel 200. The thermoplastic panel 200 includes a first skin 202 and a core 204 previously positioned within a sealed vessel 102 divided into a first chamber 112 and a second chamber 114 by the membrane 110. The second fluid pressure being within the second chamber 114. At 904, a first fluid pressure is selectively applied to the first skin 202 and the core 204 in the first chamber 112. At 906, heat is selectively directed toward the first chamber 112 to heat a bond line 216 between the first skin 202 and the core 204 to a predetermined temperature associated with creating a fusion bond at the bond line 216.

In another example of the method 900, the first fluid pressure is based on a predetermined tool pressure of a first fluid supplied to the first chamber 112.

In a further example, the predetermined tool pressure for the first fluid ranges between about 2.5 bar (e.g., about 36 psi) and about 6.9 bar (e.g., about 100 psi) or any suitable tool pressure range. In other examples, the predetermined tool pressure for the first fluid may be about the same as the pressure of the second fluid.

In another further example, the first fluid includes a dry air, an inert gas, a nitrogen gas or any suitable fluid in any suitable combination. The first fluid is selected to facilitate heat transfer by convection in the first chamber 112 and to limit heat transfer by conduction.

In yet another further example, the method 900 also includes supplying the first fluid to the first chamber 112 in response to at least one of activating a first fluid source, opening a supply line to the first chamber 112, regulating a supply pressure for the first fluid to the predetermined tool pressure and opening a fluid port associated with the first chamber 112.

In yet another example of the method 900, the second fluid pressure is based on a predetermined tool pressure of a second fluid supplied to the second chamber 114.

In a further example, the predetermined tool pressure for the second fluid ranges between about 2.5 bar (e.g., about 36 psi) and about 6.9 bar (e.g., about 100 psi) or any suitable tool pressure range or any suitable tool pressure range. In other examples, the predetermined tool pressure for the second fluid may be about the same as the pressure of the first fluid.

In another further example, the second fluid includes a dry air, an inert gas, a nitrogen gas, a mineral-based oil, a synthetic-based oil or any suitable fluid in any suitable combination. The second fluid may be selected to facilitate heat transfer by conduction through the second chamber 114 toward the first chamber 112.

In yet another further example, the method 900 also includes supplying the second fluid to the second chamber 114 in response to at least one of activating a second fluid source, opening a supply line to the second chamber 114, regulating a supply pressure for the second fluid to the predetermined tool pressure and opening a fluid port associated with the second chamber 114.

In still another example of the method 900, the core 204 includes an air permeable thermoplastic foam, an air permeable thermoplastic honeycomb structure or any suitable core material in any suitable combination.

In still yet another example of the method 900, the thermoplastic panel 200 is a thermoplastic single skin panel 208.

In another example of the method 900, the thermoplastic panel 200 also includes an interlayer film 210 between the first skin 202 and the core 204 at the bond line 216 and the first fluid pressure is also selectively applied to the interlayer film 210.

In yet another example, prior to 902, the method 900 also includes opening 908 a lid 134 of a sealed vessel 102 to gain access to the first chamber 112. After the lid 134 is open, prior to positioning the first skin 202 and the core 204, the first chamber 112 may be treated with a release agent to avoid sticking of the thermoplastic panel 200 during removal from the first chamber 112. Alternatively, prior to positioning the first skin 202 and the core 204, these items may be treated with a release agent for the same purpose. For example, the release agent may include a release film or a release liquid applied with a cloth or as a spray. The lid 134 may include eyelets 140 or similar hardware to facilitate opening the lid 134 and/or lifting the lid 134 away from the tool 100.

At 910, the first skin 202 and the core 204 of the thermoplastic panel 200 are positioned inside the first chamber 112. At 912, the lid 134 is closed to seal the first chamber 112. The tool 100 and/or lid 134 may include attaching hardware 142 suitable for securing the lid 134 in a closed position and for releasing the lid 134 to transition to an open position. The lid 134 may be configured such that, in the closed position, the height of the first chamber 112 is not less than the height of the thermoplastic panel 200 and about the same as the height of the thermoplastic panel 200 with a sufficient tolerance. For example, the lid 134 may be adjustable or sized such that the thermoplastic panel 200 is a close fit with a sufficient tolerance within the first chamber 112. After 912, the method 900 advances to 902.

In still another example, after 906, the method 900 also includes stopping 914 the directing of heat toward the first chamber 112 after the bond line 216 between the first skin 202 and the core 204 of the thermoplastic panel 200 reaches the predetermined temperature. At 916, heat from the bond line 216 is transferred to a working fluid flowing through a heat exchanger 132.

Generally, the method 900 selectively directs heat 906 toward the first chamber 112 and stops 914 selectively directing the heat to establish a non-isothermal heating and cooling cycle to create the fusion bond between the first skin 202 and the core 204 of the thermoplastic panel 200.

In a further example, the method 900 also includes supplying the working fluid to the heat exchanger 132 in response to at least one of activating a working fluid source, opening a supply line to the heat exchanger 132, adjusting a flow rate for the working fluid, opening an inlet fluid port 128 associated with the heat exchanger 132 and opening an outlet fluid port 130 associated with the heat exchanger 132. The flow rate and temperature of the working fluid received by the heat exchanger 132 may be adjusted to achieve desired temperatures at the bond line 216 at certain time intervals during a fusion bonding cycle.

In another further example, the working fluid includes a mineral-based oil, a synthetic-based oil, a coolant liquid, a water-based liquid or any suitable working fluid in any suitable combination.

In yet another further example, after 916, the method 900 also includes releasing 918 the first fluid pressure from the first chamber 112. At 920, the second fluid pressure is released from the second chamber 114. At 922, a lid 134 of the sealed vessel 102 is opened to gain access to the first chamber 112. The lid 134 may include eyelets 140 or similar hardware to facilitate opening the lid 134 and/or lifting the lid 134 away from the tool 100. At 924, the thermoplastic panel 200 is removed from the first chamber 112.

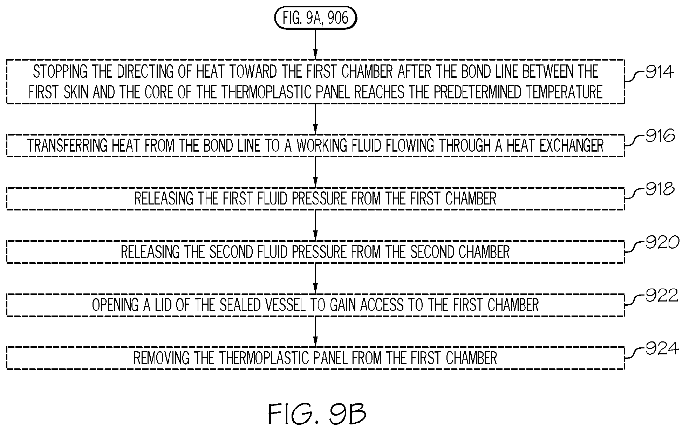

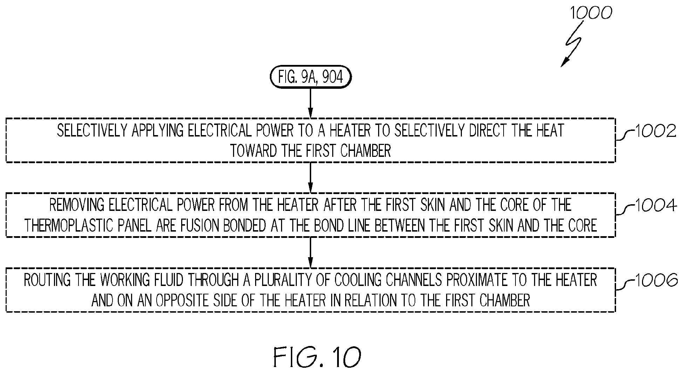

With reference again to Figs. 1, 2, 4, 7, 8, 9A, 9B and 10, in one or more examples, a method 1000 (see Fig. 10) for fabrication of a thermoplastic panel includes the method 900 of Figs. 9A and 9B. The method 1000 continues from 904 of Fig. 9A to 1002 where electrical power is selectively applied to a heater 116 to selectively direct the heat toward the first chamber 112. At 1004, electrical power is removed from the heater 116 after the first skin 202 and the core 204 of the thermoplastic panel 200 are fusion bonded at the bond line 216 between the first skin 202 and the core 204.

In another example of the method 900, the electrical power is removed from the heater 116 based at least in part on a predetermined heating time. In a further example, the predetermined heating time ranges between about 35 seconds and about 95 seconds, about 50 seconds and about 80 seconds, about 60 seconds and about 70 seconds, or any suitable heating time range.

In yet another example, the method 900 also includes routing 1006 the working fluid through a plurality of cooling channels 502 proximate to the heater 116 and on an opposite side of the heater 116 in relation to the first chamber 112.

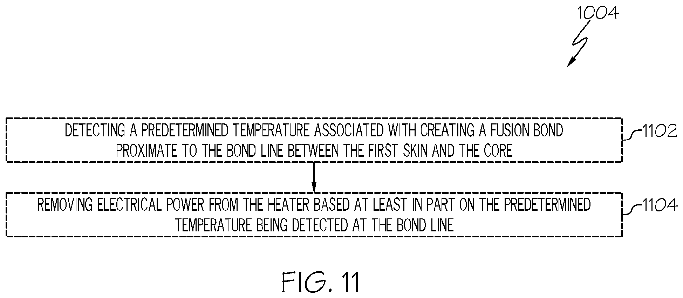

With reference again to Figs. 1, 2, 4, 7, 8, 9A, 9B, 10 and 11, in one or more examples, item 1004 (see Fig. 10) of the method 1000 includes detecting 1102 (see Fig. 11) a predetermined temperature associated with creating a fusion bond proximate to the bond line 216 between the first skin 202 and the core 204. At 1104, electrical power is removed from the heater 116 based at least in part on the predetermined temperature being detected at the bond line 216. In another example of the method 900, the predetermined temperature ranges between about 240 °C and about 280 °C, about 250 °C and about 270 °C, about 255 °C and about 265 °C, about 310 °C and about 350 °C, about 335 °C and about 375 °C, or any suitable temperature range.

With reference again to Figs. 1, 2, 7, 8, 9A, 9B and 12, in one or more examples of the method 900, the thermoplastic panel 200 also includes a second skin 212, the first fluid pressure is also selectively applied to the second skin 212 and the heat is also selectively directed to heat a second bond line 216 between the second skin 212 and the core 204 to the predetermined temperature. In another example of the method 900, the thermoplastic panel 200 is a thermoplastic sandwich panel 214.

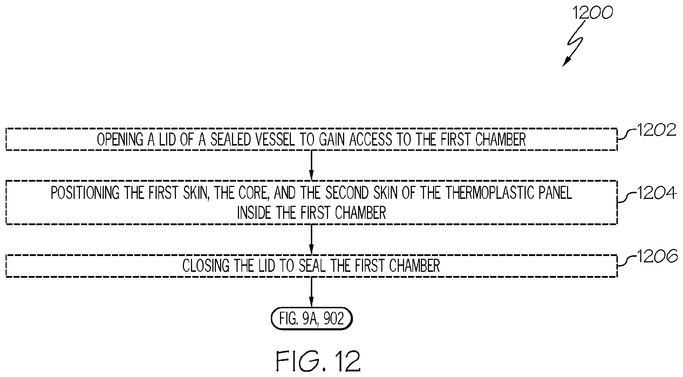

In another example, a method 1200 (see Fig. 12) for fabrication of a thermoplastic panel includes the method 900 of Figs. 9A and 9B. The method 1200 begins at 1202 where a lid 134 of a sealed vessel 102 is opened to gain access to the first chamber 112. After the lid 134 is open, prior to positioning the first skin 202 and the core 204, the first chamber 112 may be treated with a release agent to avoid sticking of the thermoplastic panel 200 during removal from the first chamber 112. Alternatively, prior to positioning the first skin 202 and the core 204, these items may be treated with a release agent for the same purpose. For example, the release agent may include a release film or a release liquid applied with a cloth or as a spray. The lid 134 may include eyelets 140 or similar hardware to facilitate opening the lid 134 and/or lifting the lid 134 away from the tool 100.

At 1204, the first skin 202, the core 204 and the second skin 212 of the thermoplastic panel 200 are positioned inside the first chamber 112. At 1206, the lid 134 is closed to seal the first chamber 112. The tool 100 and/or lid 134 may include attaching hardware 142 suitable for securing the lid 134 in a closed position and for releasing the lid 134 to transition to an open position. The lid 134 may be configured such that, in the closed position, the height of the first chamber 112 is not less than the height of the thermoplastic panel 200 and about the same as the height of the thermoplastic panel 200 with a sufficient tolerance. For example, the lid 134 may be adjustable or sized such that the thermoplastic panel 200 is a close fit with a sufficient tolerance within the first chamber 112. After 1206, the method 900 advances to 902 of Fig. 9A.

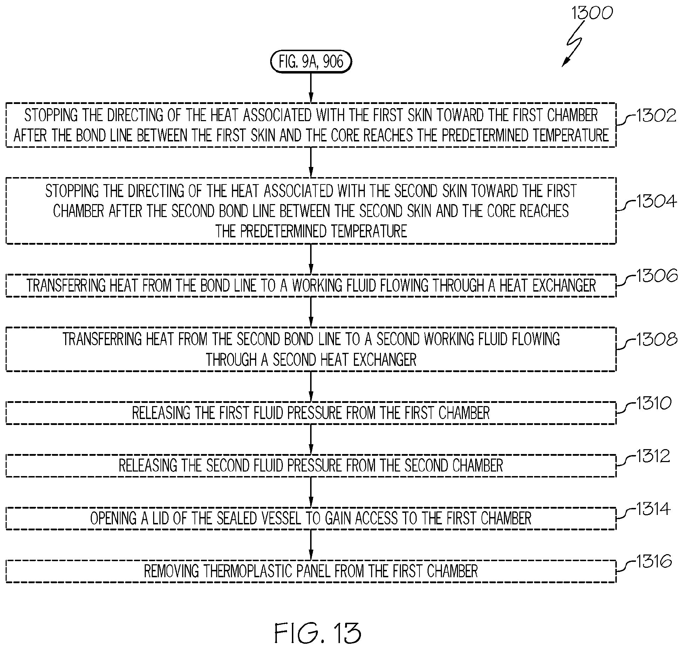

With reference again to Figs. 1, 2, 5-8, 9A, 9B and 13, in one or more examples, a method 1300 (see Fig. 13) for fabrication of a thermoplastic panel includes the method 900 of Figs. 9A and 9B. The method 1300 continues from 906 of Fig. 9A to 1302 where the directing of the heat associated with the first skin 202 toward the first chamber 112 is stopped after the bond line 216 between the first skin 202 and the core 204 of the thermoplastic panel 200 reaches the predetermined temperature. At 1304, the directing of the heat associated with the second skin 212 toward the first chamber 112 is stopped after the second bond line 216 between the second skin 212 and the core 204 of the thermoplastic panel 200 reaches the predetermined temperature. At 1306, heat is transferred from the bond line 216 to a working fluid flowing through a heat exchanger 132. At 1308, heat from the second bond line 216 is transferred to a second working fluid flowing through a second heat exchanger 132'.

In another example, the method 900 also includes releasing 1310 the first fluid pressure from the first chamber 112. At 1312, the second fluid pressure is released from the second chamber 114. At 1314, a lid 134 of the sealed vessel 102 is opened to gain access to the first chamber 112. The lid 134 may include eyelets 140 or similar hardware to facilitate opening the lid 134 and/or lifting the lid 134 away from the tool 100. At 1316, the thermoplastic panel 200 is removed from the first chamber 112.

With reference again to Figs. 2 and 3, in one or more examples, a thermoplastic panel 200 includes a first skin 202 and a core 204 bonded to the first skin 202. The core 204 includes a honeycomb structure 300 with an array of hollow cells 302 that are orthogonal to the first skin 202. The array of hollow cells 302 are formed by cell walls 304. The cell walls 304 have a plurality of breather holes 306 such that the honeycomb structure 300 is air permeable from cell to cell.

In another example, the thermoplastic panel 200 is a thermoplastic single skin panel 208.

In yet another example, the thermoplastic panel 200 also includes a second skin 212. In a further example, the thermoplastic panel 200 is a thermoplastic sandwich panel 214.

In still another example of the thermoplastic panel 200, the array of hollow cells 302 includes octagonal-shaped cells, hexagonal-shaped cells, rectangular-shaped cells, square-shaped cells, tubular-shaped cells, corrugated-shaped cells, triangular-shaped cells or cells of any suitable shape in any suitable combination.

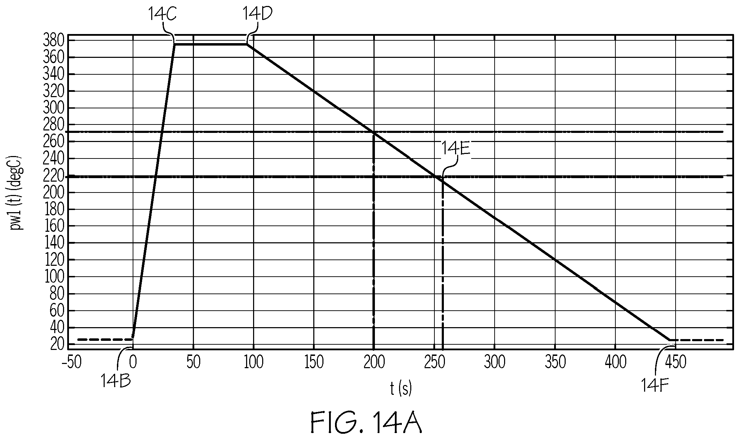

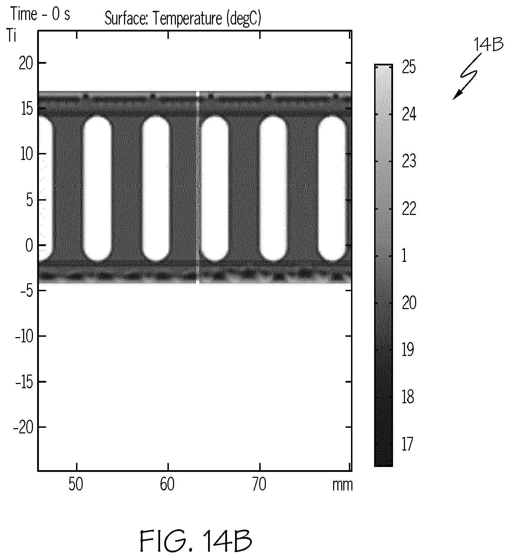

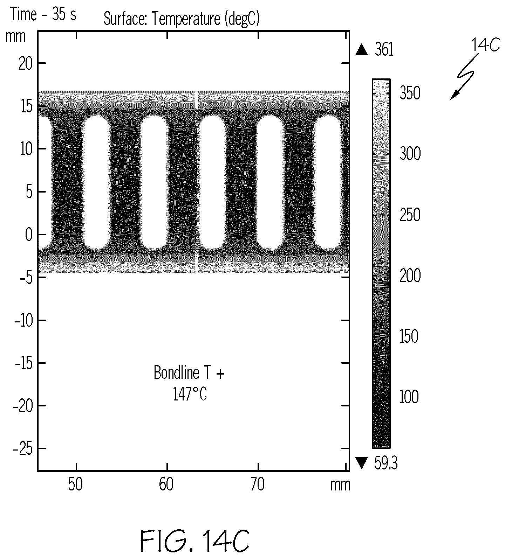

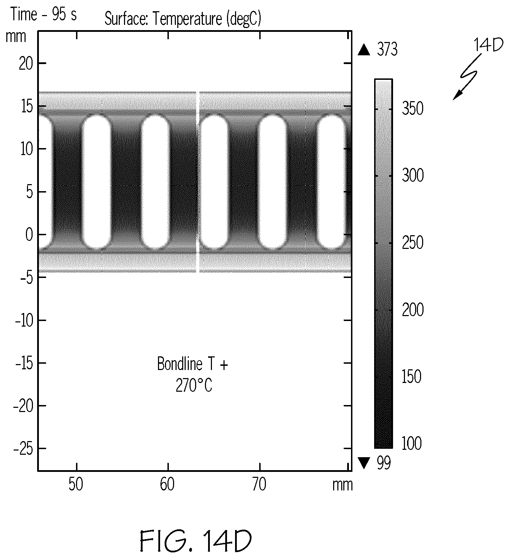

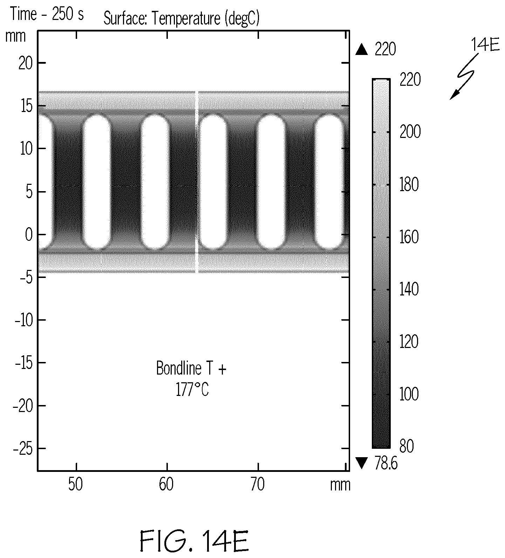

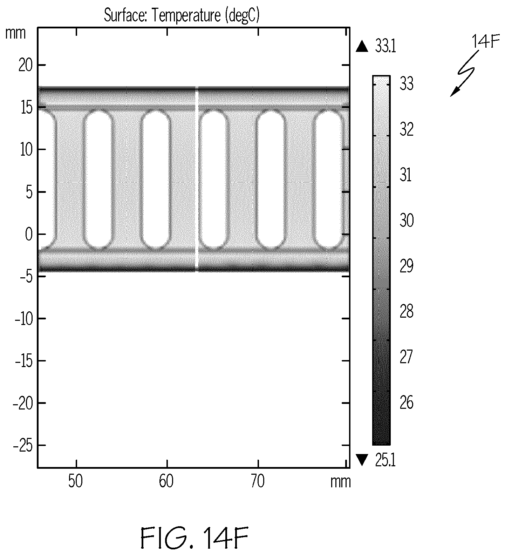

Referring generally to Figs. 14A-14F, this group of drawings provides a graph (see Fig. 14A) and five images of a thermoplastic sandwich panel associated with a trial fabrication using an example of the tool 100 disclosed here. The graph and the five images show a heating and cooling cycle during the trial fabrication.

Examples of tools 100 for fabrication of thermoplastic panels, methods 900, 1000, 1200, 1300 and thermoplastic panels 200 may be related to, or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of thermoplastic panels for manufacturing various types of vehicles and for construction of residential and commercial buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1, 2, 3A, 3B and 4-8, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1, 2, 3A, 3B and 4-8, referred to above, need be included in every example and not all elements, features, and/or components described herein are necessarily depicted in each illustrative example. Accordingly, some of the elements, features, and/or components described and illustrated in Figs. 1, 2, 3A, 3B and 4-8 may be combined in various ways without the need to include other features described and illustrated in Figs. 1, 2, 3A, 3B and 4-8, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1, 2, 3A, 3B and 4-8, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1, 2, 3A, 3B and 4-8, and such elements, features, and/or components may not be discussed in detail herein with reference to each of Figs. 1, 2, 3A, 3B and 4-8. Similarly, all elements, features, and/or components may not be labeled in each of Figs. 1, 2, 3A, 3B and 4-8, but reference numerals associated therewith may be utilized herein for consistency.

In Figs. 9A, 9B and 10-13, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 9A, 9B and 10-13 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

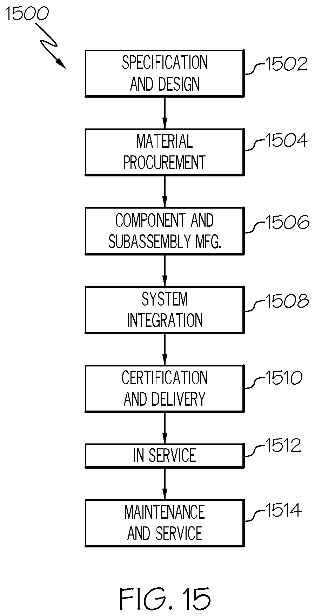

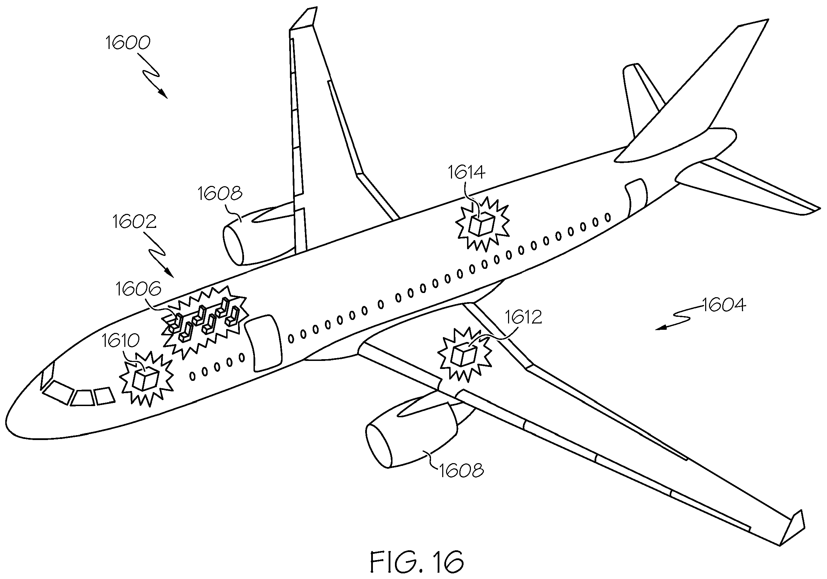

Examples of the subject matter disclosed herein may be described in the context of aircraft manufacturing and service method 1500 as shown in Fig. 15 and aircraft 1600 as shown in Fig. 16. In one or more examples, the disclosed methods and systems for associating test data for a part under test with an end item coordinate system may be used in aircraft manufacturing. During pre-production, the service method 1500 may include specification and design (block 1502) of aircraft 1600 and material procurement (block 1504). During production, component and subassembly manufacturing (block 1506) and system integration (block 1508) of aircraft 1600 may take place. Thereafter, aircraft 1600 may go through certification and delivery (block 1510) to be placed in service (block 1512). While in service, aircraft 1600 may be scheduled for routine maintenance and service (block 1514). Routine maintenance and service may include modification, reconfiguration, refurbishment, etc. of one or more systems of aircraft 1600.

Each of the processes of the service method 1500 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 16, aircraft 1600 produced by the service method 1500 may include airframe 1602 with a plurality of high-level systems 1604 and interior 1606. Examples of high-level systems 1604 include one or more of propulsion system 1608, electrical system 1610, hydraulic system 1612, and environmental system 1614. Any number of other systems may be included. Although an aerospace example is shown, the principles disclosed herein may be applied to other industries, such as the automotive industry. Accordingly, in addition to aircraft 1600, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 1500. For example, components or subassemblies corresponding to component and subassembly manufacturing (block 806) may be fabricated or manufactured in a manner similar to components or subassemblies produced while aircraft 1600 is in service (block 1512). Also, one or more examples of the system(s), method(s), or combination thereof may be utilized during production stages (block 1506 and block 1508), for example, by substantially expediting assembly of or reducing the cost of aircraft 1600. Similarly, one or more examples of the system or method realizations, or a combination thereof, may be utilized, for example and without limitation, while aircraft 1600 is in service (block 1512) and/or during maintenance and service (block 1514).

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the tool 100 for fabrication of a thermoplastic panel, associated methods 900, 1000, 1200, 1300 and thermoplastic panel 200 have been shown and described, modifications may occur to those skilled in the art upon reading the specification. The present application includes such modifications and is limited only by the scope of the claims.

## Claims

1. A tool (100) for fabrication of a thermoplastic panel (200), comprising:
a sealed vessel (102) defining a volume (104), the sealed vessel (102) comprising a first fluid port (106) and a second fluid port (108);
a membrane (110) disposed within the volume (104) to define a first chamber (112) and a second chamber (114), the first chamber (112) configured to receive a first skin (202) and a core (204) of the thermoplastic panel (200) and configured to selectively apply a first fluidic pressure to the first skin (202) and the core (204) in response to receiving a first fluid via the first fluid port (106), the membrane (110) configured to abut a major surface (206) of the thermoplastic panel (200) and the second chamber (114) configured to selectively apply a second fluidic pressure to the membrane (110) in response to receiving a second fluid via the second fluid port (108); and
a heater (116) configured to selectively direct heat toward the first chamber (112).

2. The tool of Claim 1, wherein the membrane (110) comprises a metal alloy.

3. The tool of Claim 1 or 2, wherein the core (204) comprises at least one of an air permeable thermoplastic foam and an air permeable thermoplastic honeycomb structure (300),
in particular wherein the air permeable thermoplastic honeycomb structure (300) comprises an array of hollow cells (302) orthogonal to the first skin (202), the array of hollow cells (302) formed by cell walls (304), the cell walls (304) having a plurality of breather holes (306) such that the air permeable thermoplastic honeycomb structure (300) is air permeable from cell to cell.

4. The tool of any of Claims 1 to 3, wherein the first fluid comprises at least one of a dry air, an inert gas and a nitrogen gas.

5. The tool of any of Claims 1 to 4, wherein the second fluid comprises at least one of a dry air, an inert gas, a nitrogen gas, a mineral-based oil and a synthetic-based oil.

6. The tool of any of Claims 1 to 5, wherein the heater (116) is disposed below the second chamber (114).

7. The tool of Claim 6, the tool (100) further comprising:
a heating controller (124) in operative communication with the heater (116) to selectively apply electrical power to the plurality of electric cartridge heaters (402) after the second fluid is received by the second chamber (114) and after the first fluid is received by the first chamber (112), and
wherein the heating controller (124) is configured to remove electrical power from the plurality of electric cartridge heaters (402) after the first skin (202) and the core (204) of the thermoplastic panel (200) are fusion bonded at a bond line (216) between the first skin (202) and the core.

8. The tool of Claim 7, wherein the heating controller (124) is configured to remove electrical power from the plurality of electric cartridge heaters (402) based at least in part on a predetermined heating time, in particular wherein the predetermined heating time ranges between at least one of about 35 seconds and about 95 seconds, about 50 seconds and about 80 seconds and about 60 seconds and about 70 seconds.

9. The tool of Claim 6 or 7, the sealed vessel (102) further comprising:
at least one temperature sensor (126) within the first chamber (112) and proximate to the bond line (216) between the first skin (202) and the core (204),
wherein the heating controller (124) is in operative communication with the at least one temperature sensor (126) and configured to remove electrical power from the plurality of electric cartridge heaters (402) based at least in part on a temperature signal from the at least one temperature sensor (126) indicating a predetermined temperature associated with creating a fusion bond is detected proximate to the bond line (216), in particular wherein the predetermined temperature ranges between at least one of about 240 °C and about 280 °C, about 250 °C and about 270 °C, about 255 °C and about 265 °C, about 310 °C and about 350 °C and about 335 °C and about 375 °C.

10. The tool of any of Claims 1 to 9, wherein the heater (116) is configured to selectively heat a bond line (216) between the first skin (202) and the core (204) of the thermoplastic panel (200) to a predetermined temperature associated with creating a fusion bond at the bond line (216).

11. The tool of Claim 10, wherein the sealed vessel (102) further comprises:
an inlet fluid port (128); and
an outlet fluid port (130), and
wherein the tool (100) further comprises:
a heat exchanger (132) comprising a plurality of cooling channels (502) in fluid communication with the inlet fluid port (128) and the outlet fluid port (130), the heat exchanger (132) disposed proximate to the heater (116) on an opposing side of the heater (116) in relation to the first chamber (112), the heat exchanger (132) configured to transfer heat from the bond line (216) of the thermoplastic panel (200) to a working fluid flowing through the plurality of cooling channels (502) in response to receiving the working fluid via the inlet fluid port (128).

12. The tool of Claim 11, wherein the heat exchanger (132) is configured to route the working fluid through the plurality of cooling channels (502) and out the outlet fluid port (130).

13. The tool of any of Claims 1 to 12, the sealed vessel (102) further comprising:
a lid (134) configured to open the sealed vessel (102) to provide access to the first chamber (112) for positioning the first skin (202) and the core (204) inside the first chamber (112) and configured to close to seal the first chamber (112), in particular wherein the heater (116) is disposed above the first chamber (112) within the lid (134).

14. A method for fabrication of a thermoplastic panel (200), comprising:
selectively applying (902) a second fluid pressure to a membrane (110) supporting the thermoplastic panel (200), wherein the thermoplastic panel (200) comprises a first skin (202) and a core (204) previously positioned within a sealed vessel (102) divided into a first chamber (112) and a second chamber (114) by the membrane (110), the second fluid pressure being within the second chamber (114), wherein the second fluid pressure is based on a predetermined tool pressure of a second fluid supplied to the second chamber;
selectively applying (904) a first fluid pressure to the first skin (202) and the core (204) in the first chamber (112), wherein the first fluid pressure is based on a predetermined tool pressure of a first fluid supplied to the first chamber; and
selectively directing (906) heat toward the first chamber (112) to heat a bond line (216) between the first skin (202) and the core (204) to a predetermined temperature associated with creating a fusion bond at the bond line (216);
the method further comprising:
supplying the first fluid to the first chamber (112) in response to at least one of activating a first fluid source, opening a supply line to the first chamber (112), regulating a supply pressure for the first fluid to the predetermined tool pressure and opening a fluid port associated with the first chamber (112); and
supplying the second fluid to the second chamber (114) in response to at least one of activating a second fluid source, opening a supply line to the second chamber (114), regulating a supply pressure for the second fluid to the predetermined tool pressure and opening a fluid port associated with the second chamber (114).

15. The method of claim 14, wherein the thermoplastic panel also comprises a second skin, the first fluid pressure is also selectively applied to the second skin and the heat is also selectively directed to heat a second bond line between the second skin and the core to the predetermined temperature, the method further comprising:
stopping the directing of the heat associated with the first skin toward the first chamber after the bond line between the first skin and the core of the thermoplastic panel reaches the predetermined temperature;
stopping the directing of the heat associated with the second skin toward the first chamber after the second bond line between the second skin and the core of the thermoplastic panel reaches the predetermined temperature;
transferring heat from the bond line to a working fluid flowing through a heat exchanger; and
transferring heat from the second bond line to a second working fluid flowing through a second heat exchanger;
wherein the method further comprises:
releasing the first fluid pressure from the first chamber (112);
releasing the second fluid pressure from the second chamber (114);
opening a lid (134) of the sealed vessel (102) to gain access to the first chamber (112); and
removing the thermoplastic panel (200) from the first chamber (112).

## Patentansprüche

1. Werkzeug (100) zur Herstellung eines thermoplastischen Paneels (200), aufweisend:
einen abgedichteten Behälter (102), der ein Volumen (104) definiert, wobei der abgedichtete Behälter (102) einen ersten Fluidanschluss (106) und einen zweiten Fluidanschluss (108) aufweist;
eine Membran (110), die innerhalb des Volumens (104) angeordnet ist, um eine erste Kammer (112) und eine zweite Kammer (114) zu definieren, wobei die erste Kammer (112) dazu ausgebildet ist, eine erste Deckschicht (202) und einen Kern (204) des thermoplastischen Paneels (200) aufzunehmen und dazu ausgebildet ist, selektiv einen ersten fluidischen Druck auf die erste Deckschicht (202) und den Kern (204) in Reaktion auf das Empfangen eines ersten Fluids über den ersten Fluidanschluss (106) auszuüben, wobei die Membran (110) dazu ausgebildet ist, an einer Hauptoberfläche (206) des thermoplastischen Paneels (200) anzuliegen und die zweite Kammer (114) dazu ausgebildet ist, selektiv einen zweiten fluidischen Druck auf die Membran (110) in Reaktion auf das Empfangen eines zweiten Fluids über den zweiten Fluidanschluss (108) auszuüben; und
eine Heizeinrichtung (116), die dazu ausgebildet ist, selektiv Wärme in Richtung der ersten Kammer (112) zu leiten.

2. Werkzeug nach Anspruch 1, wobei die Membran (110) eine Metalllegierung aufweist.

3. Werkzeug nach Anspruch 1 oder 2, wobei der Kern (204) mindestens eines von einem luftdurchlässigen thermoplastischen Schaum und einer luftdurchlässigen thermoplastischen Wabenstruktur (300) aufweist,
insbesondere wobei die luftdurchlässige thermoplastische Wabenstruktur (300) eine Anordnung von hohlen Zellen (302) orthogonal zu der ersten Deckschicht (202) aufweist, wobei die Anordnung von hohlen Zellen (302) durch Zellwände (304) gebildet ist, wobei die Zellwände (304) eine Vielzahl von Entlüftungsöffnungen (306) aufweisen, sodass die luftdurchlässige thermoplastische Wabenstruktur (300) von Zelle zu Zelle luftdurchlässig ist.

4. Werkzeug nach einem der Ansprüche 1 bis 3, wobei das erste Fluid mindestens eines von trockener Luft, einem Inertgas und einem Stickstoffgas aufweist.

5. Werkzeug nach einem der Ansprüche 1 bis 4, wobei das zweite Fluid mindestens eines von trockener Luft, einem Inertgas, einem Stickstoffgas, einem mineralbasierten Öl und einem synthetisch basierten Öl aufweist.

6. Werkzeug nach einem der Ansprüche 1 bis 5, wobei die Heizeinrichtung (116) unterhalb der zweiten Kammer (114) angeordnet ist.

7. Werkzeug nach Anspruch 6, wobei das Werkzeug (100) des Weiteren aufweist:
einen Heizungsregler (124) in operativer Kommunikation mit der Heizeinrichtung (116), um selektiv elektrische Leistung auf die Vielzahl von elektrischen Patronenheizelementen (402) anzulegen, nachdem das zweite Fluid von der zweiten Kammer (114) empfangen wird und nachdem das erste Fluid von der ersten Kammer (112) empfangen wird, und
wobei der Heizungsregler (124) dazu ausgebildet ist, elektrische Leistung von der Vielzahl von elektrischen Patronenheizelementen (402) zu entfernen, nachdem die erste Deckschicht (202) und der Kern (204) des thermoplastischen Paneels (200) an einer Verbindungsnaht (216) zwischen der ersten Deckschicht (202) und dem Kern verschmolzen verbunden sind.

8. Werkzeug nach Anspruch 7, wobei der Heizungsregler (124) dazu ausgebildet ist, elektrische Leistung von der Vielzahl von elektrischen Patronenheizelementen (402) zumindest teilweise basierend auf einer vorbestimmten Heizzeit zu entfernen, insbesondere wobei die vorbestimmte Heizzeit zwischen mindestens einem von etwa 35 Sekunden und etwa 95 Sekunden, etwa 50 Sekunden und etwa 80 Sekunden und etwa 60 Sekunden und etwa 70 Sekunden liegt.

9. Werkzeug nach Anspruch 6 oder 7, wobei der abgedichtete Behälter (102) des Weiteren aufweist:
mindestens einen Temperatursensor (126) innerhalb der ersten Kammer (112) und nahe der Verbindungsnaht (216) zwischen der ersten Deckschicht (202) und dem Kern (204),
wobei der Heizungsregler (124) in operativer Kommunikation mit dem mindestens einen Temperatursensor (126) ist und dazu ausgebildet ist, elektrische Leistung von der Vielzahl von elektrischen Patronenheizelementen (402) zumindest teilweise basierend auf einem Temperatursignal von dem mindestens einen Temperatursensor (126) zu entfernen, welches anzeigt, dass eine vorbestimmte Temperatur, die mit dem Erzeugen einer Verschmelzungsverbindung verbunden ist, nahe der Verbindungsnaht (216) detektiert wird, insbesondere wobei die vorbestimmte Temperatur zwischen mindestens einem von etwa 240 °C und etwa 280 °C, etwa 250 °C und etwa 270 °C, etwa 255 °C und etwa 265 °C, etwa 310 °C und etwa 350 °C und etwa 335 °C und etwa 375 °C liegt.

10. Werkzeug nach einem der Ansprüche 1 bis 9, wobei die Heizeinrichtung (116) dazu ausgebildet ist, selektiv eine Verbindungsnaht (216) zwischen der ersten Deckschicht (202) und dem Kern (204) des thermoplastischen Paneels (200) auf eine vorbestimmte Temperatur zu erhitzen, die mit dem Erzeugen einer Verschmelzungsverbindung an der Verbindungsnaht (216) verbunden ist.

11. Werkzeug nach Anspruch 10, wobei der abgedichtete Behälter (102) des Weiteren aufweist:
einen Einlassfluidanschluss (128); und
einen Auslassfluidanschluss (130), und
wobei das Werkzeug (100) des Weiteren aufweist:
einen Wärmetauscher (132), der eine Vielzahl von Kühlkanälen (502) aufweist, die in Fluidverbindung mit dem Einlassfluidanschluss (128) und dem Auslassfluidanschluss (130) stehen, wobei der Wärmetauscher (132) nahe der Heizeinrichtung (116) auf einer gegenüberliegenden Seite der Heizeinrichtung (116) relativ zu der ersten Kammer (112) angeordnet ist, wobei der Wärmetauscher (132) dazu ausgebildet ist, Wärme von der Verbindungsnaht (216) des thermoplastischen Paneels (200) auf ein Arbeitsfluid zu übertragen, das durch die Vielzahl von Kühlkanälen (502) strömt, in Reaktion auf das Empfangen des Arbeitsfluids über den Einlassfluidanschluss (128).

12. Werkzeug nach Anspruch 11, wobei der Wärmetauscher (132) dazu ausgebildet ist, das Arbeitsfluid durch die Vielzahl von Kühlkanälen (502) zu leiten und aus dem Auslassfluidanschluss (130) herauszuführen.

13. Werkzeug nach einem der Ansprüche 1 bis 12, wobei der abgedichtete Behälter (102) des Weiteren aufweist:
einen Deckel (134), der dazu ausgebildet ist, den abgedichteten Behälter (102) zu öffnen, um Zugang zu der ersten Kammer (112) zum Positionieren der ersten Deckschicht (202) und des Kerns (204) innerhalb der ersten Kammer (112) bereitzustellen, und dazu ausgebildet ist, zu schließen, um die erste Kammer (112) abzudichten, insbesondere wobei die Heizeinrichtung (116) oberhalb der ersten Kammer (112) innerhalb des Deckels (134) angeordnet ist.

14. Verfahren zur Herstellung eines thermoplastischen Paneels (200), aufweisend:
selektives Anlegen (902) eines zweiten Fluiddrucks an eine Membran (110), die das thermoplastische Paneel (200) trägt, wobei das thermoplastische Paneel (200) eine erste Deckschicht (202) und einen Kern (204) aufweist, die zuvor innerhalb eines abgedichteten Behälters (102) positioniert wurden, der durch die Membran (110) in eine erste Kammer (112) und eine zweite Kammer (114) unterteilt ist, wobei der zweite Fluiddruck innerhalb der zweiten Kammer (114) ist, wobei der zweite Fluiddruck auf einem vorbestimmten Werkzeugdruck eines zweiten Fluids basiert, das der zweiten Kammer zugeführt wird;
selektives Anlegen (904) eines ersten Fluiddrucks an die erste Deckschicht (202) und den Kern (204) in der ersten Kammer (112), wobei der erste Fluiddruck auf einem vorbestimmten Werkzeugdruck eines ersten Fluids basiert, das der ersten Kammer zugeführt wird; und
selektives Leiten (906) von Wärme in Richtung der ersten Kammer (112), um eine Verbindungsnaht (216) zwischen der ersten Deckschicht (202) und dem Kern (204) auf eine vorbestimmte Temperatur zu erhitzen, die mit dem Erzeugen einer Verschmelzungsverbindung an der Verbindungsnaht (216) verbunden ist;
wobei das Verfahren des Weiteren aufweist:
Zuführen des ersten Fluids zu der ersten Kammer (112) in Reaktion auf mindestens eines von Aktivieren einer ersten Fluidquelle, Öffnen einer Zuleitung zu der ersten Kammer (112), Regeln eines Versorgungsdrucks für das erste Fluid auf den vorbestimmten Werkzeugdruck und Öffnen eines Fluidanschlusses, der der ersten Kammer (112) zugeordnet ist; und
Zuführen des zweiten Fluids zu der zweiten Kammer (114) in Reaktion auf mindestens eines von Aktivieren einer zweiten Fluidquelle, Öffnen einer Zuleitung zu der zweiten Kammer (114), Regeln eines Versorgungsdrucks für das zweite Fluid auf den vorbestimmten Werkzeugdruck und Öffnen eines Fluidanschlusses, der der zweiten Kammer (114) zugeordnet ist.

15. Verfahren nach Anspruch 14, wobei das thermoplastische Paneel auch eine zweite Deckschicht aufweist, wobei der erste Fluiddruck auch selektiv an die zweite Deckschicht angelegt wird und die Wärme auch selektiv geleitet wird, um eine zweite Verbindungsnaht zwischen der zweiten Deckschicht und dem Kern auf die vorbestimmte Temperatur zu erhitzen, wobei das Verfahren des Weiteren aufweist:
Stoppen des Leitens der Wärme, die mit der ersten Deckschicht verbunden ist, in Richtung der ersten Kammer, nachdem die Verbindungsnaht zwischen der ersten Deckschicht und dem Kern des thermoplastischen Paneels die vorbestimmte Temperatur erreicht;
Stoppen des Leitens der Wärme, die mit der zweiten Deckschicht verbunden ist, in Richtung der ersten Kammer, nachdem die zweite Verbindungsnaht zwischen der zweiten Deckschicht und dem Kern des thermoplastischen Paneels die vorbestimmte Temperatur erreicht;
Übertragen von Wärme von der Verbindungsnaht auf ein Arbeitsfluid, das durch einen Wärmetauscher strömt; und
Übertragen von Wärme von der zweiten Verbindungsnaht auf ein zweites Arbeitsfluid, das durch einen zweiten Wärmetauscher strömt;
wobei das Verfahren des Weiteren aufweist:
Freigeben des ersten Fluiddrucks aus der ersten Kammer (112);
Freigeben des zweiten Fluiddrucks aus der zweiten Kammer (114);
Öffnen eines Deckels (134) des abgedichteten Behälters (102), um Zugang zu der ersten Kammer (112) zu erhalten; und
Entfernen des thermoplastischen Paneels (200) aus der ersten Kammer (112).

## Revendications

1. Outil (100) pour la fabrication d'un panneau thermoplastique (200), comprenant :
un récipient scellé (102) définissant un volume (104), le récipient scellé (102) comprenant un premier orifice de fluide (106) et un second orifice de fluide (108) ;
une membrane (110) disposée à l'intérieur du volume (104) pour définir une première chambre (112) et une seconde chambre (114), la première chambre (112) étant conçue pour recevoir une première peau (202) et une âme (204) du panneau thermoplastique (200) et conçue pour appliquer sélectivement une première pression fluidique sur la première peau (202) et l'âme (204) en réponse à la réception d'un premier fluide par l'intermédiaire du premier orifice de fluide (106), la membrane (110) étant conçue pour venir en butée contre une surface principale (206) du panneau thermoplastique (200) et la seconde chambre (114) étant conçue pour appliquer sélectivement une seconde pression fluidique à la membrane (110) en réponse à la réception d'un second fluide par l'intermédiaire du second orifice de fluide (108) ; et
un élément chauffant (116) conçu pour diriger sélectivement la chaleur vers la première chambre (112).

2. Outil selon la revendication 1, dans lequel la membrane (110) comprend un alliage métallique.

3. Outil selon la revendication 1 ou 2, dans lequel l'âme (204) comprend au moins l'un parmi une mousse thermoplastique perméable à l'air et une structure en nid d'abeilles thermoplastique perméable à l'air (300),
en particulier dans lequel la structure en nid d'abeilles thermoplastique perméable à l'air (300) comprend un réseau de cellules creuses (302) orthogonales à la première peau (202), le réseau de cellules creuses (302) étant formé par des parois cellulaires (304), les parois cellulaires (304) présentant une pluralité de trous d'évent (306) de telle sorte que la structure en nid d'abeilles thermoplastique perméable à l'air (300) est perméable à l'air de cellule en cellule.

4. Outil selon l'une quelconque des revendications 1 à 3, dans lequel le premier fluide comprend au moins l'un parmi un air sec, un gaz inerte et un azote gazeux.

5. Outil selon l'une quelconque des revendications 1 à 4, dans lequel le second fluide comprend au moins l'un parmi un air sec, un gaz inerte, un azote gazeux, une huile à base minérale et une huile à base synthétique.

6. Outil selon l'une quelconque des revendications 1 à 5, dans lequel l'élément chauffant (116) est disposé sous la seconde chambre (114).

7. Outil selon la revendication 6, l'outil (100) comprenant en outre :
un dispositif de commande de chauffage (124) en communication fonctionnelle avec l'élément chauffant (116) pour appliquer sélectivement de l'énergie électrique à la pluralité d'éléments chauffants électriques à cartouche (402) après que le second fluide a été reçu par la seconde chambre (114) et après que le premier fluide a été reçu par la première chambre (112), et
dans lequel le dispositif de commande de chauffage (124) est configuré pour interrompre l'énergie électrique de la pluralité d'éléments chauffants électriques à cartouche (402) après que la première peau (202) et l'âme (204) du panneau thermoplastique (200) ont été liés par fusion au niveau d'une ligne de liaison (216) entre la première peau (202) et l'âme.

8. Outil selon la revendication 7, dans lequel le dispositif de commande de chauffage (124) est configuré pour interrompre l'énergie électrique de la pluralité d'éléments chauffants électriques à cartouche (402) sur la base au moins en partie d'un temps de chauffage prédéterminé, en particulier dans lequel le temps de chauffage prédéterminé est compris entre au moins l'un parmi environ 35 secondes et environ 95 secondes, environ 50 secondes et environ 80 secondes et environ 60 secondes et environ 70 secondes.

9. Outil selon la revendication 6 ou 7, le récipient scellé (102) comprenant en outre :
au moins un capteur de température (126) à l'intérieur de la première chambre (112) et à proximité de la ligne de liaison (216) entre la première peau (202) et l'âme (204),
dans lequel le dispositif de commande de chauffage (124) est en communication fonctionnelle avec l'au moins un capteur de température (126) et configuré pour interrompre l'énergie électrique de la pluralité d'éléments chauffants électriques à cartouche (402) sur la base au moins en partie d'un signal de température provenant de l'au moins un capteur de température (126) indiquant qu'une température prédéterminée associée à la création d'une liaison par fusion est détectée à proximité de la ligne de liaison (216), en particulier dans lequel la température prédéterminée est comprise entre au moins l'un parmi environ 240 °C et environ 280 °C, environ 250 °C et environ 270 °C, environ 255 °C et environ 265 °C, environ 310 °C et environ 350 °C et environ 335 °C et environ 375 °C.

10. Outil selon l'une quelconque des revendications 1 à 9, dans lequel l'élément chauffant (116) est conçu pour chauffer sélectivement une ligne de liaison (216) entre la première peau (202) et l'âme (204) du panneau thermoplastique (200) à une température prédéterminée associée à la création d'une liaison par fusion au niveau de la ligne de liaison (216).

11. Outil selon la revendication 10, dans lequel le récipient scellé (102) comprend en outre :
un orifice de fluide d'entrée (128) ; et
un orifice de fluide de sortie (130), et
dans lequel l'outil (100) comprend en outre :
un échangeur de chaleur (132) comprenant une pluralité de canaux de refroidissement (502) en communication fluidique avec l'orifice de fluide d'entrée (128) et l'orifice de fluide de sortie (130), l'échangeur de chaleur (132) étant disposé à proximité de l'élément chauffant (116) sur un côté opposé de l'élément chauffant (116) par rapport à la première chambre (112), l'échangeur de chaleur (132) étant conçu pour transférer la chaleur de la ligne de liaison (216) du panneau thermoplastique (200) à un fluide de travail s'écoulant à travers la pluralité de canaux de refroidissement (502) en réponse à la réception du fluide de travail par l'intermédiaire de l'orifice de fluide d'entrée (128).

12. Outil selon la revendication 11, dans lequel l'échangeur de chaleur (132) est conçu pour acheminer le fluide de travail à travers la pluralité de canaux de refroidissement (502) et hors de l'orifice de fluide de sortie (130).

13. Outil selon l'une quelconque des revendications 1 à 12, le récipient scellé (102) comprenant en outre :
un couvercle (134) conçu pour ouvrir le récipient scellé (102) afin de fournir un accès à la première chambre (112) permettant de positionner la première peau (202) et le noyau (204) à l'intérieur de la première chambre (112) et conçu pour se fermer afin de sceller la première chambre (112), en particulier dans lequel l'élément chauffant (116) est disposé au-dessus de la première chambre (112) à l'intérieur du couvercle (134).

14. Procédé de fabrication d'un panneau thermoplastique (200), comprenant :
l'application sélective (902) d'une pression de second fluide à une membrane (110) supportant le panneau thermoplastique (200), dans lequel le panneau thermoplastique (200) comprend une première peau (202) et une âme (204) précédemment positionnée à l'intérieur d'un récipient scellé (102) divisé en une première chambre (112) et une seconde chambre (114) par la membrane (110), la pression de second fluide étant à l'intérieur de la seconde chambre (114), dans lequel la pression de second fluide est basée sur une pression d'outil prédéterminée d'un second fluide fourni à la seconde chambre ;
l'application sélective (904) d'une première pression de fluide sur la première peau (202) et l'âme (204) dans la première chambre (112), dans lequel la première pression de fluide est basée sur une pression d'outil prédéterminée d'un premier fluide fourni à la première chambre ; et
la direction sélective (906) de la chaleur vers la première chambre (112) pour chauffer une ligne de liaison (216) entre la première peau (202) et l'âme (204) à une température prédéterminée associée à la création d'une liaison par fusion au niveau de la ligne de liaison (216) ;
le procédé comprenant en outre :
la fourniture du premier fluide à la première chambre (112) en réponse à au moins l'un parmi l'activation d'une source de premier fluide, l'ouverture d'une conduite d'alimentation vers la première chambre (112), la régulation d'une pression d'alimentation pour le premier fluide à la pression d'outil prédéterminée et l'ouverture d'un orifice de fluide associé à la première chambre (112) ; et
la fourniture du second fluide à la seconde chambre (114) en réponse à au moins l'un parmi l'activation d'une seconde source de fluide, l'ouverture d'une conduite d'alimentation vers la seconde chambre (114), la régulation d'une pression d'alimentation pour le second fluide à la pression d'outil prédéterminée et l'ouverture d'un orifice de fluide associé à la seconde chambre (114).

15. Procédé selon la revendication 14, dans lequel le panneau thermoplastique comprend également une seconde peau, la première pression de fluide est également appliquée sélectivement à la seconde peau et la chaleur est également dirigée sélectivement pour chauffer une seconde ligne de liaison entre la seconde peau et le noyau à la température prédéterminée,
le procédé comprenant en outre :
l'arrêt de l'orientation de la chaleur associée à la première peau vers la première chambre après que la ligne de liaison entre la première peau et l'âme du panneau thermoplastique a atteint la température prédéterminée ;
l'arrêt de l'orientation de la chaleur associée à la seconde peau vers la première chambre après que la seconde ligne de liaison entre la seconde peau et l'âme du panneau thermoplastique a atteint la température prédéterminée ;
le transfert de la chaleur de la ligne de liaison à un fluide de travail s'écoulant à travers un échangeur de chaleur ; et
le transfert de la chaleur de la seconde ligne de liaison à un second fluide de travail s'écoulant à travers un second échangeur de chaleur ;
dans lequel le procédé comprend en outre :
la libération de la première pression de fluide de la première chambre (112) ;
la libération de la pression de second fluide de la seconde chambre (114) ;
l'ouverture d'un couvercle (134) du récipient scellé (102) pour accéder à la première chambre (112) ; et
le retrait du panneau thermoplastique (200) de la première chambre (112).
